# EUROPÄISCHE PATENTSCHRIFT

(11) **EP 2 717 973 B1**
(45) Veröffentlichungstag und Bekanntmachung des Hinweises auf die Patenterteilung: **05.08.2015**
(21) Anmeldenummer: 12727794.5
(22) Anmeldetag: 08.06.2012
(51) Int. Cl.: A62D 5/00

(54) **FUNKTIONELLES SCHUTZMATERIAL, INSBESONDERE FÜR DIE VERWENDUNG IN EINER SCHUTZBEKLEIDUNG**
FUNCTIONAL PROTECTIVE MATERIAL, IN PARTICULAR FOR USE IN PROTECTIVE CLOTHING
MATIÈRE DE PROTECTION FONCTIONNELLE, EN PARTICULIER POUR L'UTILISATION DANS UN VÊTEMENT DE PROTECTION

(30) Priorität: 08.06.2011 DE 102011106087
(43) Veröffentlichungstag der Anmeldung: 16.04.2014
(73) Patentinhaber: Blücher GmbH, 40699 Erkrath (DE)
(72) Erfinder: AMEIL, Frederic, 64390 Erzhausen (DE); GERL, Jürgen, 63128 Dietzenbach (DE); SUROWIEC, Alicja, 63303 Dreieich (DE); VON BLÜCHER, Hasso, 40699 Erkrath (DE)
(74) Vertreter: Von Rohr Patentanwälte Partnerschaft mbB
(86) Internationale Anmeldenummer: PCT/EP2012/002432
(87) Internationale Veröffentlichungsnummer: WO 2012/167939

(56) Entgegenhaltungen:
- EP-A2- 0 562 303
- WO-A1-00/10504
- DE-U1- 20 013 797
- US-A1- 2011 113 538
- DATABASE WPI Week 200461 Thomson Scientific, London, GB; AN 2004-632444 XP002686597, & RU 2 234 361 C1 (CHITA MED ACAD) 20. August 2004 (2004-08-20)

## Beschreibung

Die vorliegende Erfindung betrifft ein funktionelles Schutzmaterial, insbesondere mit Schutzfunktionen gegenüber chemischen und/oder biologischen Giften und/oder Schadstoffen, mit mehrschichtigem Aufbau, welches eine Membran enthält, insbesondere zur Verwendung in einer Schutzbekleidung, mit den Merkmalen des Oberbegriffs von Anspruch 1.

Des Weiteren betrifft die vorliegende Erfindung eine Membran zur Verwendung in einem derartigen funktionellen Schutzmaterial gemäß dem Oberbegriff von Anspruch 12.

Weiterhin betrifft die vorliegende Erfindung die Verwendung des erfindungsgemäßen Schutzmaterials bzw. der erfindungsgemäßen Membran gemäß Anspruch 14 sowie Schutzgegenstände gemäß Anspruch 15, welche unter Verwendung des erfindungsgemäßen Schutzmaterials bzw. der erfindungsgemäßen Membran hergestellt sind.

Zudem betrifft die vorliegende Erfindung die Verwendung des erfindungsgemäßen Schutzmaterials bzw. der erfindungsgemäßen Membran zur Herstellung von Schutzmaterialien aller Art (wie z. B. Schutzanzügen, Schutzhandschuhen, Schutzschuhen und anderen Schutzbekleidungsstücken sowie Schutzabdeckungen z. B. für Krankentransporte, Zelte, Schlafsäcke und dergleichen).

Schließlich betrifft die vorliegende Erfindung Schutzgegenstände, welche das erfindungsgemäße Schutzmaterial bzw. die erfindungsgemäße Membran aufweisen bzw. welche unter Verwendung des erfindungsgemäßen Schutzmaterials bzw. der erfindungsgemäßen Membran hergestellt sind. Das erfindungsgemäße Schutzmaterial bzw. die erfindungsgemäße Membran eignen sich somit sowohl für den militärischen als auch für den zivilen Bereich, insbesondere für den ABC-Einsatz.

Es gibt eine Reihe von Stoffen, die von der Haut aufgenommen werden und zu schweren körperlichen Schäden führen. Als Beispiele seien das Blasen induzierende Lost (synonym als "Gelbkreuz" bzw. "Senfgas" bezeichnet) und das Nervengift Sarin erwähnt. Menschen, die mit solchen Giften in Kontakt kommen können, müssen eine geeignete Schutzbekleidung tragen bzw. durch geeignete Schutzmaterialien gegen diese Gifte geschützt werden. Darüber hinaus ist es auch erforderlich, dass Menschen, die mit anderen toxischen Substanzen in Kontakt kommen können, durch entsprechende Schutzbekleidung bzw. -materialien geschützt werden.

Zu diesem Zweck sind beispielsweise luft- und wasserdampfundurchlässige Schutzanzüge bekannt, die mit einer für chemische Gifte undurchlässigen Gummischicht ausgestattet sind. Nachteilig hierbei ist, dass diese Anzüge sehr schnell zu einem Hitzestau führen, da sie luft- und wasserdampfundurchlässig sind. Nachteilig sind hierbei auch die nicht vorhandene Atmungsaktivität sowie der nicht vorhandene Luftaustausch.

Schutzanzüge gegen chemische Kampfstoffe, die für einen längeren Einsatz unter den verschiedensten Bedingungen gedacht sind, dürfen jedoch beim Träger zu keinem Hitzestau führen. Zu diesem Zweck sind im Stand der Technik luft- und wasserdampfdurchlässige Schutzanzüge bekannt, die einen relativ hohen Tragekomfort bieten. Derartige luft- und wasserdampfdurchlässige Schutzanzüge besitzen oftmals eine Adsorptionsfilterschicht mit Aktivkohle, welche die chemischen Gifte dauerhaft bindet. Der Vorteil derartiger Systeme liegt darin, dass die Aktivkohle auch an der Innenseite zugänglich ist, so dass an Beschädigungen oder sonstigen undichten Stellen eingedrungene Gifte schnell adsorbiert werden können. Unter extremen Bedingungen, insbesondere wenn ein Tropfen eines eingedickten Gift- oder Kampfstoffes aus größerer Höhe auf das Schutzanzugsmaterial auftrifft und bis zur Aktivkohle durchschlägt, kann die Aktivkohleschicht jedoch lokal überfordert sein. Zudem weisen derartige Schutzanzüge oftmals nur eine unzureichende Schutzfunktion im Hinblick auf biologische Schadstoffe auf.

Daher werden die permeablen, adsorptiven Filtersysteme, insbesondere auf Basis von Aktivkohle, oft mit einer katalytisch aktiven Komponente ausgerüstet, indem die Aktivkohle beispielsweise mit einem biozid bzw. biostatisch wirkenden Katalysator, insbesondere auf Basis von Metallen oder Metallverbindungen, imprägniert wird.

Ein derartiges Schutzmaterial ist beispielsweise in der DE 195 19 869 A1 beschrieben, welche ein mehrlagiges, textiles, gasdurchlässiges Filtermaterial mit einer Adsorptionsschicht auf Basis von Aktivkohle, insbesondere in Form von karbonisierten Fasern, enthält, die mit einem Katalysator aus der Gruppe von Kupfer, Cadmium, Platin, Palladium, Quecksilber und Zink in Mengen von 0,05 bis 12 Gew.-%, bezogen auf das Aktivkohlematerial, imprägniert ist. Nachteilig bei diesem Schutzmaterial bzw. Filtersystem ist die Tatsache, dass durch die Imprägnierung mit dem Katalysator ein Teil der Adsorptionskapazität, welche für die Adsorption und somit für die Unschädlichmachung von chemischen Schadstoffen benötigt wird, verlorengeht. Durch den Imprägnierprozess wird somit die Leistungsfähigkeit der eingesetzten Aktivkohle nachteilig beeinträchtigt. Des Weiteren ist das Imprägnieren des Aktivkohlematerials relativ aufwendig und erschwert oftmals den Herstellungsprozess für die Aktivkohle, insbesondere den Aktivierungsvorgang. Außerdem wird durch die Imprägnierung mit dem Katalysator nicht immer die gewünschte Wirksamkeit gegenüber biologischen Schadstoffen bzw. Mikroorganismen erreicht, und auch das Problem des Durchschlagens von Gift- bzw. Kampfstoffen bei hohen Konzentrationen wird durch dieses Prinzip nicht immer gelöst. Schließlich benötigt der Imprägnierprozess relativ große Mengen des Katalysatormaterials.

Weiterhin sind im Stand der Technik Schutzanzüge bekannt, welche zwar luftundurchlässig, jedoch wasserdampfdurchlässig bzw. atmungsaktiv ausgebildet sind. Derartige Schutzanzüge weisen im Allgemeinen eine als luftundurchlässige, jedoch wasserdampfdurchlässige bzw. atmungsaktive Sperrschicht gegenüber Gift- bzw. Kampfstoffen fungierende Membran auf. Schutzanzüge mit derartigen Membransystemen weisen jedoch nicht immer eine ausreichende Schutzfunktion auf. Zudem werden in diesem Zusammenhang im Stand der Technik als Schutzmembran oftmals solche Sperrschichtmembranen eingesetzt, welche nicht immer - insbesondere nicht unter Einsatzbedingungen mit einhergehender körperlicher Belastung - eine ausreichende Atmungsaktivität gewährleisten, so dass infolge des mangelnden Luftaustausches bzw. der mangelnden Abgabe von Wasserdampf durch das Schutzmaterial der Tragekomfort mitunter beeinträchtigt ist. Zudem können im Stand der Technik auch Schutzmaterialien verwendet werden, welche eine mikroporöse Membran aufweisen. Derartige Membransysteme verfügen im Allgemeinen über eine erhöhte Wasserdampfdurchlässigkeit, weisen aber den Nachteil auf, dass die Poren des mikroporösen Membransystems mitunter durchlässig für insbesondere kleine Moleküle sein können, zu denen beispielsweise die toxischen Substanzen Blausäure und Chlorgas zählen. Derartige Membransysteme können somit nicht immer einen effizienten Schutz gegenüber Schadstoffen bzw. Giften bereitstellen, welche insbesondere in Form kleiner (Gas-)Moleküle vorliegen.

Im Stand der Technik, von dem die Erfindung vorliegend ausgeht (WO 2009/086858 A1), ist die zuvor angesprochene Problematik bereits erkannt und adressiert worden. Dort ist vorgesehen, dass die an sich für Luft und Wasserdampf durchlässige und zu diesem Zweck mit einer Vielzahl von über die Membranfläche im Wesentlichen gleichmäßig verteilten Mikroporen versehene Membran mit einer reaktiven Ausrüstung, insbesondere mit einer katalytisch aktiven Komponente mit Reaktivität gegenüber chemischen und/oder biologischen Giften und/oder Schadstoffen, ausgestattet ist. Damit hat das mit einer solchen Membran ausgerüstete funktionelle Schutzmaterial mit mehrschichtigem Aufbau eine verbesserte Schutzfunktion gegenüber chemischen und/oder biologischen Giften bzw. Schadstoffen. Durch diese Ausrüstung der Membran ist ein einer etwaigen Adsorptionsschicht vorgelagerter Abbau von Gift- bzw. Schadstoffen realisiert.

Selbst bei einer in der zuvor geschilderten Weise ausgerüsteten Membran eines solchen funktionellen Schutzmaterials besteht aber noch ein Problem, das damit zu tun hat, dass die Membran an sich ja für Luft und Wasserdampf durchlässig ist und des Tragekomforts wegen auch sein soll. Im Einsatz durch einen Benutzer kann nun die Situation auftreten, dass beispielsweise organische Substanzen wie Spritzer von Fahrzeug-Kraftstoffen, die beim Auftanken von Kraftfahrzeugen auf das funktionelle Schutzmaterial treffen, die Mikroporen der Membran passieren und das im Aufbau darunter befindliche Adsorptionsmaterial sättigen. Bei späterem Auftreffen von biologischen Giften und Schadstoffen, wie Kampfstoffen, ist dann das Adsorptionsmaterial an dieser Stelle wirkungslos.

Man hat dieses Problem bereits dadurch zu lösen versucht, dass man einer Schutzbekleidung aus einem entsprechenden Schutzmaterial noch eine Außenhülle zusätzlich zuordnet (DE 20 2009 004 718 U1). Das ist aber in der praktischen Anwendung ziemlich unbequem.

Darüber hinaus betrifft die RU 2 234 361 C1 bzw. deren WPI-Abstract (DATABASE WPI, Week 200461, Thompson Scientific, London, GB) ein thermoelektrisches, membranartiges gastrennendes Element mit einem Gehäuse, welches gaszuführende und gasabführende Rohrleitungen aufweist, wobei das Element für das Clearing von Prozessgasen bzw. für Systeme zur Luftbehandlung verwendet werden soll. Das Element ist rohrförmig ausgebildet und weist eine thermoelektrische Batterie und eine Membran aus einem Dielektrikum auf, wobei die thermoelektrische Batterie zwischen den inneren und äußeren Oberflächen der Membran angeordnet ist und aus einem oder mehreren in Reihe geschalteten Peltier-Modulen besteht, welche über ihre gesamte Länge in die Membran integriert sind.

Die WO 00/10504 A1 betrifft zudem einen flexiblen Beutel zur Aufnahme von Blutprodukten mit einer ersten Wandung und einer zweiten Wandung, wobei die Wandungen an ihren äußeren Rändern zur Ausbildung eines inneren Volumens des Beutels verbunden sind. Der Beutel umfasst eine Membran, welche an einer inneren Oberfläche mindestens einer Wandung des Beutels zur Ausbildung eines abgeschlossenen Volumens zwischen der Membran und der Wandung befestigt ist, wobei das Volumen zur Aufnahme eines chemischen Mittels ausgebildet ist. Die Membran weist eine Vielzahl an Poren zur Bereitstellung einer passiven Verbindung bzw. Kommunikation zwischen dem Mittel und dem Blutprodukt auf, wobei die Poren gegenüber einer ausgewählten Eigenschaft des Blutprodukts empfindlich sind, wobei die Poren eine relativ kleinere Porengröße für einen ersten Wert der ausgewählten Eigenschaft und eine relativ größere Porengröße für einen zweiten Wert der ausgewählten Eigenschaft aufweisen.

Der Lehre liegt daher das Problem zugrunde, das bekannte funktionelle Schutzmaterial so auszugestalten und weiterzubilden, dass die zuvor geschilderte Problematik der unbeabsichtigten bereichsweisen Sättigung des Adsorptionsmaterial vermieden oder zumindest abgeschwächt wird.

Letztlich besteht die übergeordnete Problematik der vorliegenden Erfindung weiterhin darin, ein Schutzmaterial bereitzustellen, welches neben einer hohen Wasserdampfdurchlässigkeit und damit einhergehendem hohen Tragekomfort eine möglichst effektive Schutzfunktion gegenüber chemischen und/oder biologischen Giften und Schadstoffen, wie Kampfstoffen, gewährleistet.

Eine wiederum weitere Aufgabe der vorliegenden Erfindung besteht in der Bereitstellung eines Schutzmaterials, welches sich insbesondere zur Verwendung in Schutzgegenständen (wie z.B. Schutzanzügen, Schutzhandschuhen, Schutzschuhen und anderen Schutzbekleidungsstücken sowie Schutzabdeckungen, Schlafsäcken und dergleichen) eignet und dabei einen hohen Tragekomfort gewährleistet.

Zur Lösung der zuvor genannten Aufgabenstellung schlägt die vorliegende Erfindung ein funktionelles Schutzmaterial nach Anspruch 1 sowie eine Membran nach Anspruch 12 vor, wobei vorteilhafte Ausgestaltungen des Schutzmaterials bzw. der Membran jeweils Gegenstand der abhängigen Ansprüche sind. Zur weiteren Lösung der vorgenannten Aufgabenstellung schlägt die vorliegende Erfindung eine Verwendung nach Anspruch 14 und Schutzgegenstände nach Anspruch 15 vor.

Die zuvor aufgezeigte Problemstellung ist bei einem funktionellen Schutzmaterial mit den Merkmalen des Oberbegriffs von Anspruch 1 durch die Merkmale des kennzeichnenden Teils von Anspruch 1 gelöst.

Konkret ist vorgesehen, dass ein Betriebsparameter der Membran so veränderbar ist, dass die Membran zwei unterschiedliche Betriebszustände einnimmt, wobei im ersten Betriebszustand die Mikroporen der Membran offen und im zweiten Betriebszustand die Mikroporen der Membran zumindest überwiegend, vorzugsweise aber komplett verschlossen sind.

Erfindungsgemäß hat die im funktionellen Schutzmaterial verwendete Membran eine steuerbare, insbesondere schaltbare Porosität. Die Mikroporen können je nach der Einstellung des Betriebsparameters der Membran entweder offen oder zumindest überwiegend verschlossen sein. Im letztgenannten Betriebszustand ist die Membran komplett dicht.

Anders als im Stand der Technik wird ein aus einem funktionellen Schutzmaterial der vorliegenden Art hergestellter Schutzgegenstand nicht über einen anderen Weg von Innen belüftet (DE 200 13 797 U1; US-A-3,174,300; EP 1 494 760 B1). Vielmehr ist die Membran selbst schaltbar und kann zwei Zustände einnehmen, nämlich den ersten Zustand, bei dem die Membran für Luft und Wasserdampf durchlässig ist, und den zweiten Zustand, bei dem die Membran für Luft und Wasserdampf nicht mehr durchlässig ist, weil ihre Mikroporen vorzugsweise verschlossen sind.

Bevorzugte Ausgestaltungen und Weiterbildungen des erfindungsgemäßen funktionellen Schutzmaterials mit einer erfindungsgemäßen Membran sind Gegenstand der auf das funktionelle Schutzmaterial bezogenen Unteransprüche. Diese werden nun im Einzelnen erläutert.

Die grundlegende Idee der vorliegenden Erfindung besteht darin, dass man einen Betriebsparameter der Membran so verändert, dass die Membran zwei unterschiedliche Betriebszustände, je nach dem Wert des Betriebsparameters, einnehmen kann. Im ersten Betriebszustand sind die Mikroporen der Membran offen, im zweiten Betriebszustand der Membran sind die Mikroporen zumindest überwiegend verschlossen.

Zur Realisierung einer Membran mit einer steuerbaren, insbesondere schaltbaren Porosität gibt es verschiedene Möglichkeiten.

Zu beeinflussende Betriebsparameter der Membran gibt es unterschiedliche. Beispielsweise könnte man an eine im lateralen Bahnwiderstand veränderbare Membran denken, die nach Art eines PTC-Widerstandes oder NTC-Widerstandes arbeitet.

Erfindungsgemäß ist allerdings vorgesehen, dass der Betriebsparameter die Betriebstemperatur der Membran ist und der erste Betriebszustand durch Erwärmen der Membran von einer niedrigen Betriebstemperatur auf eine hohe Betriebstemperatur und der zweite Betriebszustand durch Abkühlen der Membran von einer hohen Betriebstemperatur auf eine niedrige Betriebstemperatur erreichbar ist. Hier wird unmittelbar die Oberflächentemperatur der Membran beeinflusst.

Versuche haben gezeigt, dass bei der häufigen Anwendung des funktionellen Schutzmaterials in einer Schutzbekleidung für Personen zweckmäßigerweise die hohe Betriebstemperatur der Membran bei 25 °C bis 40 °C und die niedrige Betriebstemperatur der Membran um etwa 5 °C bis 25 °C, vorzugsweise etwa 6 °C bis 15 °C, unter der hohen Betriebstemperatur der Membran liegt.

Fraglich ist ferner, wie die Änderung des Betriebsparameters der Membran in eine Änderung der Porosität der Membran umgesetzt wird. Auch dazu gibt es verschiedene Möglichkeiten.

Eine erste Möglichkeit besteht darin, die Membran, insbesondere im Bereich der Mikroporen, mit einem Hydrogel zu beschichten (siehe z. B. die ein "chemisches Ventil" betreffende EP-A-0 562 303) oder eine Lage der Membran als Hydrogel auszuführen.

Normalerweise führt die Beaufschlagung einer mit Mikroporen versehenen Membran in einem funktionellen Schutzmaterial der in Rede stehenden Art mit Wasserdampf nicht zur Beeinträchtigung ihrer Wasserdampfdurchlässigkeit. Es ist ja gerade Sinn der Membran, insoweit eine hohe Wasserdampfdurchlässigkeit zu haben. Beschichtet man jedoch die Membran mit einem
Hydrogel entsprechender Schichtdicke, so ergibt sich ein von der Betriebstemperatur der Membran abhängiger Quellzustand des Hydrogels. Das thermosensitive Hydrogel bleibt oberhalb seiner Schalttemperatur kollabiert, darin befindliches Wasser ist als Wasserdampf freigesetzt worden, die Mikroporen sind wasserdampfdurchlässig. Kühlt die Membran unter die Schalttemperatur des Hydrogels ab, so quillt das Hydrogel bei Anwesenheit von Wasser auf und verschließt so die Mikroporen.

Die Realisierung einer Membran mit schaltbarer Porosität durch Einsatz eines thermosensitiven Hydrogels ist experimentell bewiesen. Allerdings ist die Herstellung eines funktionellen Schutzmaterials mit einer solchen Membran schwierig.

Eine Alternative, die einfacher zu realisieren ist, besteht darin, dass die Mikroporen der Membran unmittelbar durch darin befindliches, insbesondere durch Adhäsion gehaltenes Wasser verschlossen werden. In diesem Fall wird zum Verschließen der Mikroporen der Membran Wasser genutzt, das im zweiten Betriebszustand an der Membran kondensiert und die Mikroporen in der Membran zumindest überwiegend verschließt. Das Eintreten des Wassers in die Mikroporen erfolgt insbesondere unter Wirkung der in den Mikroporen auftretenden Kapillarkräfte, also durch Adhäsion an den Innenseiten der Mikroporen. Hier wird also der Effekt der Kapillaraszension genutzt, der auftritt, wenn die Kohäsionskraft innerhalb der Flüssigkeit gegenüber der Adhäsionskraft der Flüssigkeit an der Wandung, hier der Wandung der Mikroporen der Membran, gering ist, die Flüssigkeit also die Oberfläche benetzt. Je geringer der Durchmesser der Kapillaren, desto stärker ist die Kapillarität und die Steighöhe der Flüssigkeit in der Kapillare.

Für eine wassergefüllte Glasröhre, die gegen Luft auf Meereshöhe offen ist, ergibt sich bei 20 °C und einer Kapillare mit einem Durchmesser von 20 µm eine theoretische Steighöhe von 1,4 m. Dabei ist selbstverständlich, dass, da nur Adhäsionskräfte wirken, die Flüssigkeitssäule in der Kapillare nur bis zu deren Ende steigen kann, selbst wenn die Kapillarität an sich eine größere Steighöhe erlauben würde.

Das zuvor geschilderte Phänomen der Kapillarität wird erfindungsgemäß in der Membran durch die Mikroporen genutzt. Ein Betriebsparameter der Membran wird so verändert, dass an der Membran flüssiges Wasser vorhanden ist, nämlich daran kondensiert, so dass dieses Wasser durch Kapillarkraft in die Mikroporen hineingesogen wird. Die Mikroporen werden daher in diesem Betriebszustand durch Wasser verschlossen. Die an sich für Luft und Wasserdampf durchlässige Membran ist in diesem Betriebszustand für Luft und Wasserdampf undurchlässig. Lediglich wasserlösliche Stoffe können in dem in den Mikroporen befindlichen Wasser gelöst werden. Hindurchtreten durch die Membran können aber auch sie nicht.

Im Ergebnis ist erfindungsgemäß die Membran des funktionellen Schutzmaterials steuerbar zwischen dem ersten Betriebszustand, bei dem sie für Luft und Wasserdampf durchlässig ist, und dem zweiten Betriebszustand, bei dem ihre Mikroporen durch darin befindliches Wasser zumindest überwiegend verschlossen sind.

Die Erfindung macht sich gerade in dieser Ausführungsform die besonderen Umstände innerhalb einer Schutzbekleidung mit einem solchen funktionellen Schutzmaterial zunutze. Ein Nutzer eines solchen funktionellen Schutzmaterials hat eine hohe Schweißabsonderung, der Wasserdampfdruck innerhalb eines solchen Schutzanzuges ist relativ hoch. Man kann davon ausgehen, dass bei entsprechender Abkühlung der Membran im zweiten Betriebszustand eine hinreichende Kondensation von Wasser an der Innenseite der Membran auftritt.

In der eingangs geschilderten Situation eines Nutzers eines solchen funktionnellen Schutzmaterials kann der Nutzer die Membran des funktionellen Schutzmaterials gezielt in den zweiten Betriebszustand mit verschlossenen Mikroporen versetzen und dadurch den Eintritt von unerwünschten, insbesondere von das eventuell vorhandene Adsorptionsmaterial sättigenden Schadstoffen verhindern. Später, wenn der Nutzer des funktionellen Schutzmaterials seine entsprechende Arbeit beendet hat, kann er die Membran des funktionellen Schutzmaterials wieder in ihren ersten Betriebszustand zurück versetzen. Sie ist dann wieder für Luft und Wasserdampf durchlässig, weil die Mikroporen nicht mehr mit Wasser verschlossen sind. Das Schutzmaterial hat wieder seine ursprünglich gewünschte hohe Wasserdampfdurchlässigkeit und den damit einhergehenden angenehmen Tragekomfort erreicht.

Der relevante Betriebsparameter, der hier genutzt wird, ist die Betriebstemperatur der Membran. Liegt sie hoch, so kondensiert kein Wasser auf der Membran, das Wasser an der Membran liegt nur in Form von Wasserdampf vor und kann die offenen Mikroporen durchsetzen. Sinkt die Temperatur der Membran, so kondensiert Wasserdampf auf der Membran. Das sich an der Membran bildende Kondenswasser wird durch Kapillarwirkung in die Mikroporen hineingesogen und verschließt die Mikroporen der Membran.

Die Funktionalität der Membran des funktionellen Schutzmaterials und die Steuerbarkeit der Membran sind dann besonders gut, wenn die Reaktion der Mikroporen auf eine Änderung der Betriebstemperatur möglichst einheitlich ist. Dazu empfiehlt es sich, dass die Mikroporen der Membran eine im Wesentlichen einheitliche Form und Größe, insbesondere Kreisform, haben.

Während in dem den Ausgangspunkt bildenden Stand der Technik die Mikroporen der Membran bevorzugt sehr geringe Durchmesser haben, erlaubt es die erfindungsgemäße Konzeption, die Mikroporen der Membran im Mittel etwas größer werden zu lassen, so dass sich die Wasserdampfdurchlässigkeit verbessert. Erfindungsgemäß ist vorgesehen, dass bevorzugt die Mikroporen der Membranen einen mittleren Durchmesser aufweisen, der klein genug ist, um in den Mikroporen Wasser durch Kapillarkraft zu halten, insbesondere einen mittleren Durchmesser zwischen 1 µm und 15 µm, vorzugsweise zwischen 4 µm und 12 µm.

Nach bevorzugter Lehre der Erfindung haben sich Membranen als besonders zweckmäßig erwiesen, die eine Dicke zwischen 1 µm und 500 µm, insbesondere zwischen 10 µm und 100 µm, vorzugsweise zwischen 20 µm und 70 µm, aufweist. In diesem Zusammenhang ist anzumerken, dass eine solche Membran typischerweise ein Flächengewicht von 0,5 g/m² bis 100 g/m², insbesondere von 1 g/m² bis 35 g/m², aufweist.

Für die Verteilung der Mikroporen auf der Membran empfiehlt es sich, dass der Flächenanteil der Mikroporen auf der Membran zwischen 1 % und 50 %, insbesondere zwischen 2 % und 30 %, vorzugsweise zwischen 5 % und 25 %, beträgt.

Bei dieser Gelegenheit ist anzumerken, dass die erfindungsgemäß schaltbare bzw. in ihrer Porosität steuerbare Membran eines erfindungsgemäßen funktionellen Schutzmaterials kombiniert werden kann mit der aus dem eingangs erläuterten Stand der Technik bekannten reaktiven Ausrüstung der Membran (WO 2009/086858 A1), insbesondere im Bereich der Mikroporen. Für Einzelheiten dieser reaktiven Ausrüstung der Membran, insbesondere im Bereich der Mikroporen, wird auf die hier angesprochene, den Ausgangspunkt für die vorliegende Lehre bildende Entgegenhaltung verwiesen.

Nach bevorzugter Lehre der Erfindung ist ferner vorgesehen, dass die Membran als Folie aus Kunststoff, Keramik oder Metall oder als mehrlagige Folie mit Lagen aus Kunststoff und/oder Keramik und/oder Metall ausgeführt ist. Führt man die Membran mehrlagig aus, so kann man den einzelnen Lagen unterschiedliche Aufgaben innerhalb des die Membran bildenden Verbundes zuweisen.

Nach bevorzugter Lehre ist ferner vorgesehen, dass die Membran einen Kunststoff und/oder ein Polymer umfasst oder hieraus besteht, insbesondere wobei der Kunststoff und/oder das Polymer ausgewählt ist aus der Gruppe von Polyurethanen, Polyetheramiden, Polyesteramiden, Polyetherestern, Polytetrafluorethylenen und/oder Polymeren auf Cellulosebasis und/oder Derivaten der vorgenannten Verbindungen, vorzugsweise Polyetherestern und Polytetrafluorethylenen, wobei, besonders bevorzugt, die Membran aus Polyethylen (PE) besteht.

Insbesondere dann, wenn die Membran aus einem Kunststoff, insbesondere aus Polyethylen (PE), besteht, ist die laterale Wärmeleitfähigkeit der Membran für die praktische Anwendung auf großen Flächen meist nicht hoch genug. Zwar kann man auch Kunststoffe entsprechend modifizieren, so dass ihre laterale Wärmeleitfähigkeit erhöht wird. Möglicherweise reicht das für die erfindungsgemäßen Anwendungsfälle eines funktionellen Schutzmaterials jedoch nicht aus.

Reicht also die laterale Wärmeleitfähigkeit für eine gleichmäßige Temperaturveränderung der Membran innerhalb akzeptabler Zeiträume (Schaltzeiten) nicht aus, so kann es sich empfehlen, dass die Membran eine Ausrüstung, Lage oder, vorzugsweise, Beschichtung aufweist, die zu einer erhöhten lateralen Wärmeleitfähigkeit der Membran führt.

Ein besonders bevorzugtes Beispiel einer zusätzlichen, die laterale Wärmeleitfähigkeit verbessernden Ausrüstung, Lage oder Beschichtung ist dadurch zu realisieren, dass die Ausrüstung, Lage oder, vorzugsweise, Beschichtung aus einem gut wärmeleitenden, vorzugsweise chemisch inerten, Material, insbesondere einem Metall oder einer Metalllegierung, ganz insbesondere aus Gold, besteht. Ganz bevorzugt ist vorgesehen, dass die Beschichtung aus Gold eine Dicke zwischen 5 nm und 1.000 nm, vorzugsweise zwischen 100 nm und 800 nm, aufweist.

Von besonderer Bedeutung ist die Benetzbarkeit der Oberflächen, die mit dem kondensierenden Wasser in Berührung kommen. Die Kapillarität der Mikroporen in der Membran beruht auf der Benetzbarkeit der Oberfläche der Membran, insbesondere an den Innenwänden der Mikroporen. Die Kapillarität kann durch mechanische und/oder chemische Oberflächenbearbeitung der Membran, insbesondere im Bereich ihrer Mikroporen beeinflusst werden (siehe entsprechende Vorschläge z. B. in der EP 0 563 605 A1). Erfindungsgemäß ist vorgesehen, dass man die Membran, insbesondere im Bereich der Mikroporen, so in der Oberfläche bearbeitet, dass die gewünschte Kapillarität für den praktischen Einsatz eintritt.

Eine die laterale Wärmeleitfähigkeit erhöhende Beschichtung hat evtl. zur Folge, dass sich die Kapillarität im Bereich der Beschichtung verschlechtert. Demzufolge kann es sich empfehlen, dass man die an sich zweckmäßige, die laterale Wärmeleitfähigkeit der Membran erhöhende Beschichtung, nicht beidseitig, sondern nur einseitig auf das im Übrigen die Membran bildende folienartige Material aufbringt. Auf diese Weise gewinnt man die gewünschte hohe laterale Wärmeleitfähigkeit der Membran, erhält aber gleichwohl auf einer Seite und in die Mikroporen der Membran hinein die hohe, die Kapillarität verbessernde Benetzbarkeit der Membran.

Zweckmäßigerweise wird man die letztgenannte Seite bei dem funktionellen Schutzmaterial gemäß der Erfindung nach innen, zum Träger hin richten, die gegenüberliegende, mit der die Wärmeleitfähigkeit verbessernden Beschichtung versehene Seite der Membran hingegen nach außen richten. Es ist nämlich im Anwendungsfall damit zu rechnen, dass der kondensierende Wasserdampf sich auf der Innenseite der Membran befindet.

Es ist bislang noch nichts darüber gesagt worden, wie man den gewünschten Betriebsparameter der Membran in der gewünschten Weise verändern kann. Auch dafür gibt es natürlich verschieden Möglichkeiten.

Wählt man die Arbeitstemperatur der Membran als zu verändernden Betriebsparameter, so kann man die Arbeitstemperatur der Membran direkt dadurch verändern, dass man durch die dazu begrenzt elektrisch leitfähig ausgeführte Membran einen elektrischen Strom bestimmter Stärke leitet. Die Membran bzw. die Lage einer mehrlagigen Membran, die die gewünschte Leitfähigkeit aufweist, wirkt dabei als Heizleiter. Bei Stromfluss wird die Membran aufgeheizt und das an sich in den Mikroporen befindliches Wasser ausgetrieben.

Ein Problem bei dem zuvor geschilderten Verfahren ist, dass man auf diese Weise zwar die Membran von einem im Wesentlichen geschlossenen Zustand in einen Betriebszustand bringen kann, in dem die Mikroporen im Wesentlichen geöffnet sind. Der umgekehrte Schaltvorgang hingegen ist schwierig und jedenfalls langsam, weil lediglich die natürliche Abkühlung der Membran genutzt werden kann.

Erfindungsgemäß empfiehlt es sich daher, dass die Membran mit einer Einrichtung zur Abkühlung, und vorzugsweise auch zur Erwärmung, der Membran bzw. einer Lage oder Beschichtung der Membran thermisch gekoppelt ist. Nach bevorzugter Lehre der Erfindung ist dabei vorgesehen, dass die Einrichtung eine elektrothermisch arbeitende Einrichtung ist, vorzugsweise ausgeführt als Peltiereinrichtung, insbesondere ausgeführt als eine Mehrzahl von über die Membran verteilt angeordneten Peltierelementen.

Eine elektrothermisch arbeitende Einrichtung ist deshalb besonders zweckmäßig, weil hier keine mechanisch zu bewegenden Bauteile vorgesehen sind. Auch ist die Verwendung von Kühlmittel nicht erforderlich. Vielmehr tritt der elektrothermische Effekt ohne jedes zu bewegende Teil oder Element ein.

Die erfindungsgemäß bevorzugt zu verwendende Peltiereinrichtung ist ein elektrothermischer Wandler, der auf dem Peltiereffekt beruht (Brockhaus "NATURWISSENSCHAFTEN UND TECHNIK", Band 4 NI-SN, Wiesbaden 1983, Seite 60, Kennwort "Peltiereffekt"; siehe auch die oben bereits genannten DE 200 13 797 U1). Bei Stromdurchfluss durch eine Peltiereinrichtung wird eine Temperaturdifferenz an einander gegenüberliegenden Enden erzeugt. Ein Peltierelement besteht heutzutage üblicherweise aus mindestens zwei unterschiedlich dotierten Halbleitern, die ein unterschiedliches Energieniveau ihrer Leitungsbänder besitzen. Leitet man einen Strom durch zwei in Reihe geschaltete Kontaktstellen dieser Materialien, so wird an der einen Kontaktstelle Wärmeenergie aufgenommen. An der anderen Kontaktstelle fallen die Elektronen vom höheren wieder auf das tiefere Energieniveau des benachbarten Leitungsbandes zurück. Hier wird Energie in Form von Wärme freigegeben. Führt man diese Wärme ab, so dass an dieser Stelle die Temperatur im Wesentlichen gleich bleibt, kommt es an der erstgenannten Kontaktstelle zu einer Abkühlung. Durch die Wirkung des fließenden elektrischen Stromes wird Wärme von der kalten Seite zur warmen Seite gepumpt und eine Temperaturdifferenz erzeugt.

Durch Umkehr der Stromrichtung kann man mit einem Peltierelement die Zuordnung der Kontaktstellen ändern. Man kann somit von "Kühlen" auf "Heizen" umschalten.

Erfindungsgemäß ist es besonders zweckmäßig, wenn man wegen der größeren Fläche der Membran eines funktionellen Schutzmaterials der in Rede stehenden Art, nicht nur eine zentrale Peltiereinrichtung verwendet, sondern insgesamt eine Mehrzahl von verteilt angeordneten Peltierelementen einsetzt. Die Flächengröße von Peltierelementen ist ohnehin begrenzt. Durch Verwendung mehrerer Peltierelemente, die direkt an die Membran bzw. deren leitende Beschichtung thermisch angekoppelt sind, erreicht man eine gleichmäßigere Abkühlung oder Erwärmung der Membran.

An der nicht mit der Membran bzw. deren Beschichtung thermisch gekoppelten Seite der Peltiereinrichtung bzw. der Peltierelemente sollte man Maßnahmen zur gleichmäßigen Wärmeabfuhr treffen. Besonders bevorzugt ist es, dass die nicht mit der Membran verbundene Seite der Peltiereinrichtung bzw. der Peltierelemente direkt oder unter Zwischenschaltung einer wärmeleitenden Verbindung auf die im Anwendungsfall der Umgebung zugewandte Seite des Schutzmaterials geführt ist.

Was die Verbindung der Membran mit dem Trägermaterial des erfindungsgemäßen Schutzmaterials anbelangt, so sollte die Membran zumindest im Wesentlichen vollflächig mit dem Trägermaterial verbunden sein. Erfindungsgemäß kann es aber auch in bevorzugter Weise vorgesehen sein, dass die Membran abschnittsweise, insbesondere punktförmig mit dem Trägermaterial verbunden ist. Die Membran kann somit insbesondere mittels eines vorzugsweise punktförmig aufgetragenen Klebstoffs auf die Trägerschicht auflaminiert oder aufkaschiert sein. Die Trägerschicht wirkt quasi als Stützschicht für die Membran und erhöht die mechanische Stabilität und Reißfestigkeit der Membran. Als im Rahmen der vorliegenden Erfindung verwendbare Klebstoffe kommen dem Fachmann in diesem Zusammenhang an sich bekannte Klebstoffe, wie beispielsweise polyurethanbasierte Klebstoffe oder dergleichen, in Betracht.

Das erfindungsgemäß eingesetzte Trägermaterial kann ein Gewebe, Gewirke, Gestricke, Gelege, Vlies oder Textilverbundstoff sein. Zudem kann das Trägermaterial ein Flächengewicht von 20 bis 250 g/m², insbesondere 30 bis 150 g/m², vorzugsweise 40 bis 120 g/m², aufweisen. Das Trägermaterial sollte abriebfest ausgebildet sein und insbesondere aus einem abriebfesten Textilmaterial bestehen. Zudem kann das Trägermaterial zur weiteren Erhöhung der Schutzfunktion gegenüber chemischen und biologischen Gift- bzw. Schadstoffen hydro- und/oder oleophobiert und/oder plasmabehandelt sein.

Das Trägermaterial stellt gewissermaßen die Abdeckschicht dar und ist im Tragezustand bzw. Gebrauchszustand des resultierenden erfindungsgemäßen Schutzmaterials vorzugsweise auf der dem Träger abgewandten Seite der Membran angeordnet. Das Trägermaterial kann Natur- und/oder Chemiefasern aufweisen bzw. hieraus bestehen. Vorzugsweise besteht das Trägermaterial aus Chemiefasern, bevorzugt aus der Gruppe von Polyamiden, Polyestern, Polyolefinen, Polyurethanen, Polyvinyl (z. B. Polyvinylalkohole) und/oder Polyacryl.

Wie zuvor abgeführt, kann das Trägermaterial oleo- und/oder hydrophobiert sein, insbesondere um im Falle des Auftreffens größerer Tropfen von Schad- und Giftstoffen diese auf der Oberfläche des erfindungsgemäßen Schutzmaterials zu verteilen bzw. um diese von der Oberfläche "abperlen" zu lassen; für diesen Zweck geeignete Oleo- bzw. Hydrophobierungsmittel sind dem Fachmann hinlänglich bekannt (z. B. Fluorpolymere, wie Fluorkarbonharze). Des Weiteren kann das Trägermaterial mit einem Flammschutz (z. B. Phosphorsäureester) ausgerüstet sein. Des Weiteren kann das Trägermaterial auch antistatisch ausgerüstet sein. Weiterhin kann das Trägermaterial auch mit einer Tarnbedruckung, insbesondere bei der Herstellung von ABC-Schutzanzügen, versehen sein.

Das im Rahmen der vorliegenden Erfindung eingesetzte Trägermaterial sollte eine Querschnittsdicke bzw. Dicke von 0,05 bis 5 mm, vorzugsweise 0,1 bis 1 mm, insbesondere 0,2 bis 0,5 mm, aufweisen.

Gemäß einer weiteren erfindungsgemäß bevorzugten Ausführungsform weist auch das Schutzmaterial nach der Erfindung eine Adsorptionsschicht auf Basis eines insbesondere chemische und/oder biologische Gifte und/oder Schadstoffe adsorbierenden Adsorptionsmaterial auf, insbesondere wobei die Adsorptionsschicht der dem Trägermaterial abgewandten Seite der Membran zugeordnet ist. Durch die zweckgerichtete Ausrüstung des erfindungsgemäßen Schutzmaterials mit einer zusätzlichen Adsorptionsschicht werden die Schutzwirkungen insgesamt noch weiter verbessert. In diesem Zusammenhang sollte die Membran im Tragezustand auf der der Schadstoffquelle bzw. -exposition zugewandten Seite der Adsorptionsschicht angeordnet sein, so dass die Membran gewissermaßen als vorgelagerte Barriereschicht in Bezug auf die Adsorptionsschicht fungiert. Dies hat den Vorteil, dass bereits ein Großteil der Gift- bzw. Schadstoffe durch die Membran von der Adsorptionsschicht ferngehalten wird und die Adsorptionsschicht somit quasi nicht erschöpft. Die Verwendung einer Adsorptionsschicht hat zudem den Vorteil, dass auch bei sehr hohen Schadstoffkonzentrationen, insbesondere wenn die Membran aufgrund mechanischer Einflüsse beschädigt wird, in das Schutzmaterial eindringende Gift- bzw. Schadstoffe effektiv adsorbiert werden können. Die Membran kann gleichermaßen als Trägermaterial für die Adsorptionsschicht dienen, wobei die Adsorptionsschicht beispielsweise mittels eines punktförmigen Klebstoffauftrags bzw. eines punktrasterförmigen Klebstoffauftrags mit der Membran verbunden sein kann. Hieraus resultiert eine hohe Zugänglichkeit der Adsorbentien für die zu adsorbierenden Gift- bzw. Schadstoffe, insbesondere wobei mindestens 30 %, insbesondere mindestens 40 %, vorzugsweise mindestens 50 % und besonders bevorzugt mindestens 70 %, der Oberfläche der Adsorbentien für die Gift- bzw. Schadstoffe frei zugänglich, d. h. nicht mit Klebstoff bedeckt, sein sollte.

Was das Adsorptionsmaterial der Adsorptionsschicht anbelangt, so kann dies ein Material auf Basis von Aktivkohle, insbesondere in Form von Aktivkohleteilchen oder Aktivkohlefasern, sein.

Die Verwendung von Aktivkohle als Adsorptionsmaterial hat zudem den Vorteil, dass durch die Pufferwirkung der Aktivkohle der Tragekomfort noch zusätzlich verbessert wird, weil die Aktivkohle als Feuchtigkeits- bzw. Wasserspeicher oder -puffer (z. B. für Köperschweiß) dient.

Die Adsorptionsschicht ist vorzugsweise als ein Adsorptionsflächenfilter ausgebildet. Die Adsorptionsschicht kann als Adsorptionsmaterial diskrete Aktivkohleteilchen, vorzugsweise in Kornform ("Kornkohle") oder Kugelform ("Kugelkohle"), umfassen, wobei der mittlere Durchmesser der Aktivkohleteilchen weniger als 1,0 mm, vorzugsweise weniger als 0,8 mm, bevorzugt weniger als 0,6 mm, betragen kann.

Kornkohle, insbesondere Kugelkohle weist den entscheidenden Vorteil auf, dass sie enorm abriebfest und sehr hart ist, was in Bezug auf die Verschleißeigenschaften von großer Bedeutung ist. Bevorzugterweise beträgt der Berstdruck für ein einzelnes Aktivkohleteilchen, insbesondere Aktivkohlekörnchen bzw. -kügelchen, im Allgemeinen mindestens etwa 5 N, insbesondere mindestens etwa 10 N, und kann bis zu etwa 20 N erreichen. Bei dieser Ausführungsform werden die Aktivkohlekörnchen im Allgemeinen in einer Menge von 5 bis 500 g/m², insbesondere 10 bis 400 g/m², vorzugsweise 20 bis 300 g/m², bevorzugt 25 bis 250 g/m², auf die Membran oder ein gegebenenfalls weiteres Trägermaterial aufgebracht.

Gemäß einer alternativen Ausführungsform kann die Adsorptionsschicht als Adsorptionsmaterial Aktivkohlefasern, insbesondere in Form eines Aktivkohleflächengebildes, umfassen. Derartige Aktivkohleflächengebilde können beispielsweise ein Flächengewicht von 20 bis 200 g/m², insbesondere 50 bis 150 g/m², aufweisen. Bei diesen Aktivkohleflächengebilden kann es sich beispielsweise um ein Aktivkohlegewebe, -gewirke, -gelege oder -verbundstoff, beispielsweise auf Basis von karbonisierter und aktivierter Cellulose und/oder eines karbonisierten und aktivierten Acrylnitrils, handeln.

Gleichermaßen ist es im Rahmen der vorliegenden Erfindung möglich, für die Ausbildung der Adsorptionsschicht Aktivkohleteilchen einerseits und Aktivkohlefasern andererseits miteinander zu kombinieren. In diesem Zusammenhang bilden Aktivkohleteilchen den Vorteil einer höheren Adsorptionskapazität, während Aktivkohlefasern eine bessere Adsorptionskinetik aufweisen.

Die erfindungsgemäß verwendete Aktivkohle weist vorzugsweise eine innere Oberfläche (BET) von mindestens 800 m²/g, insbesondere von mindestens 900 m²/g, vorzugsweise von mindestens 1.000 m²/g, bevorzugt im Bereich von 800 bis 2.000 m²/g, auf.

Im Rahmen der vorliegenden Erfindung kann es vorgesehen sein, dass zwischen der Membran und der Adsorptionsschicht außerdem eine Abstandsschicht angeordnet ist, welche beispielsweise in Form eines Vlieses (Nonwoven), einer dünnen Schaumstoffschicht oder eines textilen Flächengebildes (z. B. eines Gewirkes) ausgebildet sein kann. Die zusätzliche Abstandsschicht hat den Vorteil, dass sie die mechanische Belastung der Adsorptionsschicht bzw. der Membran verringert, weil zwischen der Membran einerseits und der Adsorptionsschicht andererseits eine zusätzliche Schicht vorhanden ist, welche mechanische Belastungen abfangen bzw. dämpfen kann. Im Falle der Verwendung einer Abstandsschicht kann die Adsorptionsschicht insbesondere mittels eines punktrasterförmigen Klebstoffauftrags mit der Abstandsschicht verbunden sein. Zudem kann die Abstandsschicht auf der der Adsorptionsschicht abgewandten Seite gleichermaßen punktrasterförmig mit der Membran verbunden sein. Was das Flächengewicht der Abstandsschicht anbelangt, so sollte dieses im Bereich von 5 bis 100 g/m², insbesondere 10 bis 75 g/m², vorzugsweise 15 bis 50 g/m², liegen.

Im Rahmen der vorliegenden Erfindung kann es gleichermaßen vorgesehen sein, dass das Schutzmaterial eine Innenschicht, insbesondere ein Innenmutter, aufweist. In diesem Fall kann die Innenschicht der dem Trägermaterial abgewandten Seite der Membran zugeordnet sein. In diesem Zusammenhang kann das Innenmutter, sofern keine Adsorptionsschicht verwendet ist, insbesondere punktrasterförmig mit der Membran verklebt sein. Im Falle der Verwendung einer zusätzlichen Adsorptionsschicht kann das Innenfutter auf der der Membran gegenüberliegenden Seite der Adsorptionsschicht aufgebracht sein, wobei auch diesbezüglich eine insbesondere punktrasterförmige Verklebung vorgesehen sein kann. Die Verwendung einer Innenschicht führt, sofern keine zusätzliche Adsorptionsschicht vorgesehen ist, gleichermaßen zu einer Schutzfunktion gegenüber der Membran. Bei Verwendung einer Adsorptionsschicht wird die Adsorptionsschicht zudem von Verunreinigungen, welche von der Trägerperson stammen, wie z. B. Körperschweiß, geschützt. Auf diese Weise wird somit auch die Effizienz der Adsorptionsschicht erhöht. Darüber hinaus steigert die Innenschicht, welche im Tragezustand dem Träger zugewandt ist, den Tragekomfort, insbesondere das weiche Tragegefühl des erfindungsgemäßen Schutzmaterials.

Erfindungsgemäß kann es vorgesehen sein, dass die Innenschicht in Form eines textilen Flächengebildes ausgebildet ist. Beispielsweise kann die Innenschicht ein Gewebe, Gewirke, Gestricke, Gelege, Textilverbundstoff oder Vlies sein. Als diesbezügliche Materialien können die bereits oben erwähnten Materialien für das Trägermaterial eingesetzt werden. Die Innenschicht sollte ein Flächengewicht von 5 bis 100 g/m², insbesondere 10 bis 75 g/m², vorzugsweise 15 bis 50 g/m², aufweisen.

Was das Schutzmaterial insgesamt anbelangt, so kann dieses ein Gesamtflächengewicht von 150 bis 1.000 g/m², insbesondere 200 bis 800 g/m², vorzugsweise 250 bis 600 g/m², besonders bevorzugt 300 bis 500 g/m², aufweisen. Zudem sollte das Schutzmaterial eine Gesamtquerschnittsdicke bzw. Dicke von 0,1 mm bis 20 mm, insbesondere 0,5 mm bis 15 mm, vorzugsweise 1 mm bis 10 mm, bevorzugt 2 mm bis 5 mm, aufweisen.

Was das erfindungsgemäße Schutzmaterial weiterhin anbelangt, so ist es besonders vorteilhaft, wenn das Schutzmaterial bei 25 °C und bei einer Dicke der Membran von 50 µm bei geöffneter Membran eine Wasserdampfdurchlässigkeit von mindestens 10 l/m ² pro 24 h, insbesondere mindestens 15 l/m² pro 24 h, vorzugsweise mindestens 20 l/m² pro 24 h, aufweist. Zudem sollte das Schutzmaterial bei geöffneter Membran einen Wasserdampfdurchgangswiderstand Rₑₜ unter stationären Bedingungen, gemessen nach DIN EN 31 092:1993 (Februar 1994) und internationaler Norm ISO 11 092, bei 35 °C, von höchstens 30 (m² ·Pascal)/Watt, insbesondere höchstens 25 (m²·Pascal)/Watt, vorzugsweise höchstens 15 (m²·Pascal)/Watt, bei einer Dicke der Membran von 50 µm, aufweisen. Schließlich sollte das erfindungsgemäße Schutzmaterial eine Barrierewirkung gegenüber chemischen Kampfstoffen, insbesondere Bis[2-chlorethyl]sulfid (Senfgas, Lost, Gelbkreuz), gemessen im Diffusionsströmungstest, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, bei einer Dicke Membran von 50 µm, aufweisen. Was den Diffusionsströmungstest anbelangt, so ist dieser dem Fachmann an sich bekannt und wird zudem im Rahmen der Ausführungsbeispiele noch weiter erläutert.

Gegenstand der Erfindung ist auch für sich eine Membran gemäß Anspruch 12, die für den Einsatz in einem funktionellen Schutzmaterial der in Rede stehenden Art bestimmt und geeignet ist. Bevorzugte Ausgestaltungen und Weiterbildungen dieser Membran als solcher sind Gegenstand des Anspruchs 13.

Ein weiterer Gegenstand der vorliegenden Erfindung - gemäß einem wiederum weiteren Aspekt der vorliegenden Erfindung - ist die Verwendung des erfindungsgemäßen funktionellen Schutzmaterials bzw. der erfindungsgemäßen Membran zur Herstellung von Schutzgegenständen aller Art, wie Schutzanzügen, Schutzhandschuhen, Schutzschuhwerk und anderen Schutzbekleidungsstücken sowie Schutzabdeckungen, Schlafsäcken, Zelten und dergleichen, vorzugsweise für den ABC-Einsatz, und zwar sowohl für zivile als auch militärische Anwendungen.

Ein wiederum weiterer Gegenstand der vorliegenden Erfindung - gemäß einem wiederum weiteren Aspekt der vorliegenden Erfindung - sind Schutzgegenstände, insbesondere Schutzanzüge, Schutzhandschuhe, Schutzschuhwerk und andere Schutzbekleidungsstücke sowie Schutzabdeckungen, Schlafsäcke und dergleichen, welche unter Verwendung des erfindungsgemäßen Schutzmaterials bzw. unter Verwendung der erfindungsgemäßen Membran hergestellt sind bzw. das erfindungsgemäße Schutzmaterial bzw. die erfindungsgemäße Membran aufweisen.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in Bezug auf die übrigen Erfindungsaspekte entsprechend gelten.

Im Folgenden wird die Erfindung anhand einer ein bevorzugtes Ausführungsbeispiel darstellenden Zeichnung näher erläutert. Im Zusammenhang mit der Erläuterung eines bevorzugten Ausführungsbeispiels der Erfindung werden auch weitere Vorteile, Eigenschaften, Aspekte und Merkmale der vorliegenden Erfindung beschrieben.

In der Zeichnung zeigt
- Fig. 1: eine schematische Schnittdarstellung durch den Schichtaufbau eines erfindungsgemäßen funktionellen Schutzmaterials gemäß einer bevorzugten Ausführungsform der Erfindung,
- Fig. 2: in einer schematischen Darstellung einen vergrößerten Schnitt durch den Bereich der Membran des Schutzmaterials aus Fig. 1 in drei verschiedenen Betriebszuständen,
- Fig. 3: eine schematische Darstellung einer Membran des funktionellen Schutzmaterials aus Fig. 1 in Verbindung mit einer zugeordneten Einrichtung zur Steuerung der Porosität dieser Membran,
- Fig. 4: ein Diagramm zur Darstellung der Ergebnisse von zwei Versuchsaufbauten eines Ausführungsbeispiels der in Rede stehenden Art und
- Fig. 5: ein weiteres Diagramm resultierend aus einem Versuchsaufbau für ein Ausführungsbeispiel eines funktionellen Schutzmaterials gemäß der Erfindung.

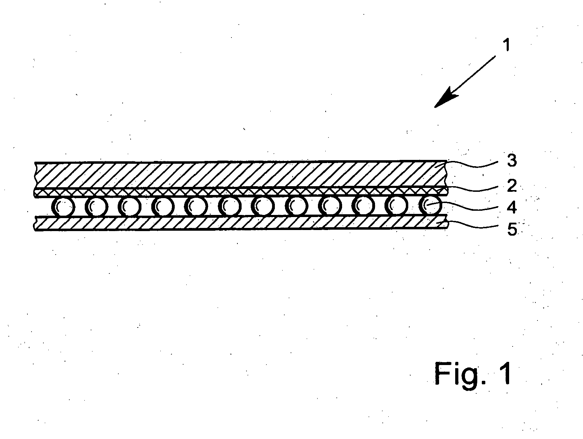

Fig. 1 zeigt eine schematische Schnittdarstellung des erfindungsgemäßen funktionellen Schutzmaterials 1, insbesondere mit Schutzfunktion gegenüber chemischen und/oder biologischen Giften und/oder Schadstoffen, wie Kampfstoffen. Dabei umfasst das funktionelle Schutzmaterial 1 nach der Erfindung einen mehrschichtigen Aufbau, wobei der mehrschichtige Aufbau ein flächiges, insbesondere textiles Trägermaterial 3 und eine dem Trägermaterial 3 zugeordnete, insbesondere mit dem Trägermaterial 3 verbundene Membran 2 aufweist. Die Figur zeigt weiterhin die Ausrüstung des erfindungsgemäßen Schutzmaterials 1 mit einer fakultativen Adsorptionsschicht 4, welche auf die Membran 2 aufgebracht ist. Schließlich ist der Figur die erfindungsgemäße Ausführungsform zu entnehmen, dass das erfindungsgemäße Schutzmaterial 1 fakultativ mit einer im Tragezustand dem Träger zugewandten Innenschicht 5 versehen ist. Zu den mechanischen, physikalischen und/oder chemischen Eigenschaften der vorgenannten Schichten bzw. Lagen bzw. des erfindungsgemäßen Schutzmaterials 1 an sich kann auf die obigen Ausführungen verwiesen werden, die in Bezug auf die spezielle Ausgestaltung entsprechend gelten.

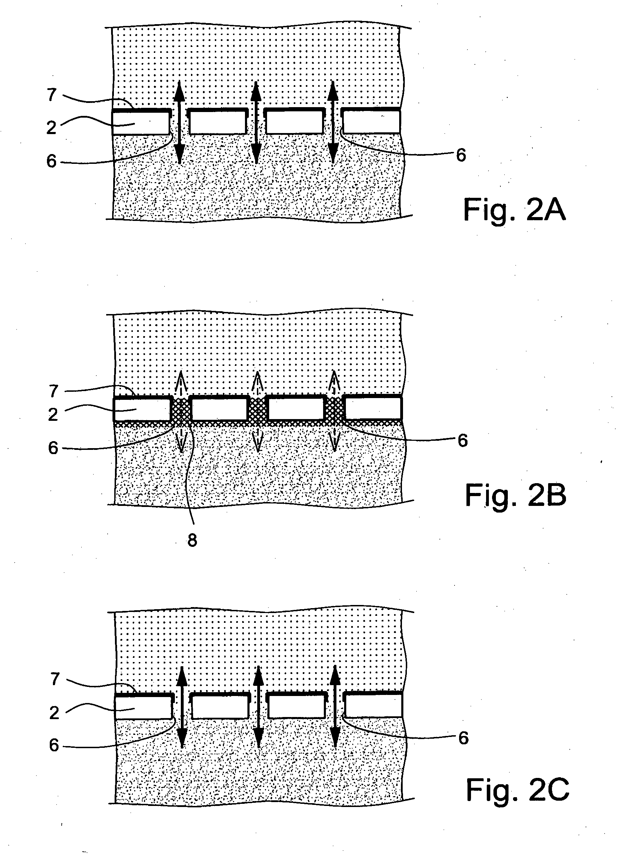

Fig. 2 zeigt in drei unterschiedlichen Funktionszuständen nun die Membran 2 eines funktionellen Schutzmaterials 1 der erfindungsgemäßen Art, um die Funktion der in der Porosität steuerbaren bzw. schaltbaren Membran 2 zu erläutern.

In Fig. 2A ist unten angedeutet und eng punktiert die Seite der Membran 2, die im Tragezustand des funktionellen Schutzmaterials 1 der in Rede stehenden Art normalerweise dem Träger zugewandt ist. Der Träger bzw. der Benut- ' zer eines entsprechenden funktionellen Schutzmaterials 1, insbesondere in einem Schutzanzug, hat eine starke Schweißabsonderung, hier findet man also eine hohe Luftfeuchtigkeit. Der in Fig. 2A oben dargestellte, nicht so eng punktierte Bereich ist derjenige, der im Tragezustand vom Träger abgewandt ist, sich also an der Außenseite eines entsprechenden funktionellen Schutzmaterials 1 im Kontakt mit der Umgebungsatmosphäre findet.

In der Membran 2 in Fig. 2A ist angedeutet, dass diese Membran 2 an sich für Luft und Wasserdampf durchlässig ist (Doppelpfeile). Dazu ist sie mit einer Vielzahl von über die Membranfläche vorzugsweise im Wesentlichen gleichmäßig verteilten Mikroporen 6 versehen.

Fig. 2A zeigt den ersten Betriebszustand der Membran 2, in dem die Mikroporen 6 der Membran 2 offen sind. Das funktionelle Schutzmaterial 1 lässt einen guten Austausch durch die Membran 2 hindurch zu.

Fig. 2B zeigt nun schematisch dargestellt, dass sich hier der Betriebsparameter der Membran 2 erfindungsgemäß verändert hat. Die Membran 2 nimmt nun ihren zweiten Betriebszustand ein, in dem die Mikroporen 6 der Membran 2 zumindest überwiegend, hier dargestellt komplett, verschlossen sind. Das ist durch die nur noch dünn und gestrichelt dargestellten Doppelpfeile angedeutet.

Nach Lehre der Erfindung ist vorgesehen, dass der Betriebsparameter die Betriebstemperatur der Membran 2 ist und der erste Betriebszustand durch Erwärmen der Membran 2 von einer niedrigen Betriebstemperatur auf eine hohe Betriebstemperatur und der zweite Betriebszustand durch Abkühlen der Membran 2 von einer hohen Betriebstemperatur auf eine niedrige Betriebstemperatur erreichbar ist.

Bereits im allgemeinen Teil der Beschreibung ist erläutert worden, dass für die hier vorgesehenen üblichen Betriebszustände die hohe Betriebstemperatur der Membran 2 bei 25 °C bis 40 °C und die niedrige Betriebstemperatur der Membran 2 um etwa 5 °C bis 25 °C, vorzugsweise etwa 6 °C bis 15 °C, unter der hohen Betriebstemperatür der Membran 2 liegt.

Das dargestellte und bevorzugte Ausführungsbeispiel deutet die erfindungsgemäß bevorzugte Methode an, die nicht mit einem Hydrogel arbeitet, sondern unmittelbar kondensiertes Wasser zum Verschluss der Mikroporen 6 nutzt. Fig. 2B deutet durch die gekreuzte Schraffur an, dass die Mikroporen 6 im zweiten Betriebszustand der Membran 2 durch in den Mikroporen 6 befindliches, insbesondere durch Adhäsion darin gehaltenes Wasser 8 verschlossen sind. Auf der in Fig. 2B unten liegenden Innenseite der Membran 2 kondensiert wegen der Abkühlung der Membran 2 das durch den Körperschweiß in der Luft befindliche Wasser 8. Es wird durch Kapillarkräfte in die Mikroporen 6 hineingezogen und verschließt die Mikroporen 6. Von außen her können Fremdstoffe, die nicht wasserlöslich sind, die Mikroporen 6 nicht durchsetzen. Aber auch Fremdstoffe, die wasserlöslich sind, erreichen nur die Mikroporen 6 und werden dort im Wasser gelöst und gehalten.

Fig. 2C zeigt den weiteren Zustand, bei dem dann die Betriebstemperatur der Membran 2 wieder erhöht worden ist. Die Mikroporen 6 sind wieder frei, weil das Wasser in den Mikroporen 6 zu Wasserdampf geworden ist.

Hinsichtlich der Form und Größe der Mikroporen 6 der Membran 2 darf auf den allgemeinen Teil der Beschreibung verwiesen werden. Dort sind ausführliche Angaben dazu gemacht worden. Dasselbe gilt hinsichtlich bevorzugter Dicken der Membran 2, hinsichtlich eines bevorzugten Flächenanteils der Mikroporen 6 auf der Membran 2 und hinsichtlich der Materialwahl für die Membran 2. Bevorzugt handelt es sich bei der Membran 2 im dargestellten Ausführungsbeispiel um eine Folie aus Polyethylen (PE).

Fig. 2 zeigt in allen drei Varianten weiter, dass nach bevorzugter Lehre die Membran 2 eine Ausrüstung, Lage oder, vorzugsweise, Beschichtung 7 aufweist, die zu einer erhöhten lateralen Wärmeleitfähigkeit der Membran 2 führt. Die hier nach bevorzugter Lehre vorgesehene Beschichtung 7 besteht aus einem gut wärmeleitenden, vorzugsweise chemisch inerten Material, insbesondere einem Metall oder einer Metalllegierung, ganz insbesondere aus Gold. Das dargestellte und bevorzugte Ausführungsbeispiel zeigt dabei, dass die Beschichtung aus Gold eine Dicke zwischen 5 nm und 1.000 nm, vorzugsweise zwischen 10 nm und 800 nm, aufweist. Bevorzugt hat die Dicke der Goldbeschichtung einen Wert von mindestens 100 nm, vorzugsweise von 300 nm bis 700 nm.

Man muss in der Praxis zwischen dem Wunsch nach einer schnellen Verteilung der Wärme bzw. einem schnellen Entzug von Wärme auf der Fläche der Membran 2 einerseits und den Kosten einer entsprechend gut wärmeleitenden Beschichtung andererseits abwägen. Die angegebenen Werte haben sich als recht zweckmäßig erwiesen.

Das dargestellte und bevorzugte Ausführungsbeispiel zeigt in Fig. 2 im Übrigen, dass hier die Beschichtung 7 nicht beidseits, sondern nur einseitig auf die die Membran 2 im Übrigen bildenden Folie aufgebracht ist. Im allgemeinen Teil der Beschreibung ist erläutert worden, welche Vorteile dies hat. Zwar ist die Wärmeverteilung in der Fläche der Membran 2 nicht ganz so gut wie bei einer beidseitig aufgebrachten Beschichtung 7 aus dem gut wärmeleitenden Material. Wesentlich ist aber, dass die Kapillarität des Materials der Membran 2, insbesondere in den Mikroporen 6, ohne eine solche gut wärmeleitende Beschichtung besser ist. Man hat also mit der erfindungsgemäß dargestellten Membran 2 besonders gute Verschluss- und Öffnungszeiten von nur wenigen Minuten.

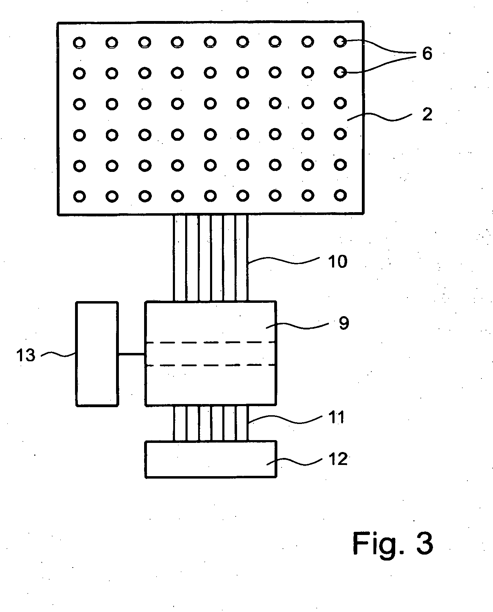

Fig. 3 zeigt weiter die Anordnung, die zu einer entsprechenden Beeinflussung der Membran 2 zur Erreichung der verschiedenen Betriebszustände geeignet ist. Fig. 3 zeigt oben schematisch angedeutet, lediglich zum Zwecke der Erläuterung des Prinzips, die Membran 2 mit den Mikroporen 6. Dargestellt ist nun, dass die Membran 2 mit einer Einrichtung 9 zur Abkühlung, und vorzugsweise auch zur Erwärmung, der Membran 2 bzw. einer Lage oder Beschichtung 7 der Membran 2 thermisch gekoppelt ist. Im dargestellten Ausführungsbeispiel ist die intensive thermische Kopplung durch die vielen parallelen Striche zwischen der Einrichtung 9 und der Membran 2 angedeutet. Diese repräsentieren die innere wärmeleitende Verbindung 10.

Ferner ist hier nach bevorzugter Lehre vorgesehen, dass die Einrichtung 9 eine elektrothermisch arbeitende Einrichtung ist, vorzugsweise ausgeführt als Peltiereinrichtung, insbesondere ausgeführt als eine Mehrzahl von über die Membran 2 verteilt angeordneten Peltierelementen. Im allgemeinen Teil der Beschreibung ist diese Konzeption ausführlich erläutert worden, auch mit Hinweis auf Quellen im Stand der Technik. Auf diese Ausführungen darf verwiesen werden.

Das dargestellte und bevorzugte Ausführungsbeispiel sieht ferner vor, dass die nicht mit der Membran 2 verbundene Seite der Peltiereinrichtung 9 bzw. der Peltierelemente direkt oder unter Zwischenschaltung einer wärmeleitenden Verbindung 11 auf die im Anwendungsfall der Umgebung zugewandte Seite des Schutzmaterials 1 geführt ist. Man sieht die wärmeleitende Verbindung 11, die zu einem Wärmetauscher 12 auf der im Anwendungsfall der Umgebung zugewandten Seite des Schutzmaterials 1 geführt ist. Ferner erkennt man in Fig. 3 angedeutet eine elektronische Steuerung 13, mit deren Hilfe der Benutzer die Porosität der Membran 2 gezielt steuern bzw. schalten kann.

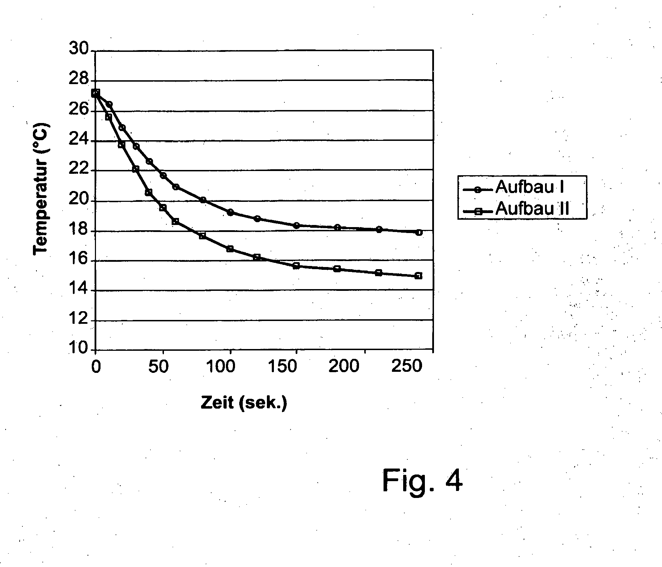

Fig. 4 zeigt Beispiele an zwei Versuchsaufbauten für das Abkühlen einer Membran 2 mittels einer Gruppe von Peltierelementen. Die beiden Aufbauten unterscheiden sich durch die verwendeten Prüfapparaturen. In beiden Fällen wurde eine PE-Folie von 36 µm Dicke mit einem Flächenanteil der Mikroporen 6 von etwa 10% und einem durchschnittlichen Durchmesser der Mikroporen von 9,5 µm verwendet. Man sieht, dass im einen Fall beim Abkühlen nach etwa 250 s eine Temperaturdifferenz von etwa 9°C erreicht war. Mit der anderen Prüfapparatur, die einen etwas besseren Wärmeübergang vom Peltierelement 9 auf die Membran 2 ermöglichte, erreichte man im gleichen Zeitraum eine Abkühlung von 12°C. Die Mikroporen 6 waren in beiden Fällen nach diesem Zeitraum komplett geschlossen, ein Differenzdruck von etwa 8 mbar konnte messtechnisch ohne weiteres nachgewiesen werden.

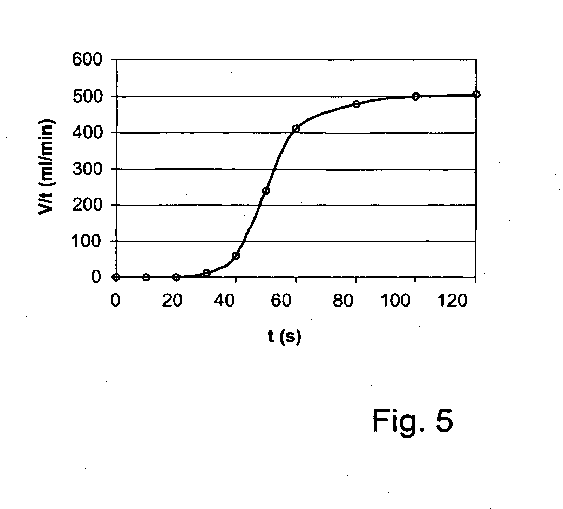

Fig. 5 zeigt den wirksamen Strömungsquerschnitt des beispielhaft geprüften Materials der Membran 2. Hier ergibt sich der umgekehrte Weg beim Öffnen der Membran 2. Zunächst war die Membran 2 noch kühl und die Mikroporen 6 waren noch geschlossen. Nach etwa 40 s der Erwärmung durch das Peltierelement 9 begannen sich die Mikroporen 6 zu öffnen, der Öffnungszustand war nach etwa 100 s komplett.

Für weitere bevorzugte Ausgestaltungen des erfindungsgemäßen Schutzmaterials 1 hinsichtlich der verschiedenen in Fig. 1 dargestellten Schichten - Membran 2, Trägermaterial 3, Absorptionsschicht 4, Innenschicht 5 - darf auf den allgemeinen Teil der Beschreibung und die diesbezüglichen weiteren Unteransprüche verwiesen werden.

### Bezugszeichenliste:

- 1: Schutzmaterial
- 2: Membran
- 3: Trägermaterial
- 4: Adsorptionsschicht
- 5: Innenschicht
- 6: Mikroporen
- 7: Beschichtung
- 8: Wasser - kondensiert
- 9: Einrichtung - Peltier
- 10: wärmeleitende Verbindung, innen
- 11: wärmeleitende Verbindung, außen
- 12: Wärmetauscher, außen
- 13: Steuerung

## Patentansprüche

1. Funktionelles Schutzmaterial (1), insbesondere mit Schutzfunktion gegenüber chemischen und/oder biologischen Giften und/oder Schadstoffen, wie Kampfstoffen,
wobei das funktionelle Schutzmaterial (1) einen mehrschichtigen Aufbau umfasst, wobei der mehrschichtige Aufbau
- ein flächiges, insbesondere textiles Trägermaterial (3) und
- eine dem Trägermaterial (3) zugeordnete, insbesondere mit dem Trägermaterial (3) verbundene Membran (2)
aufweist,
wobei die Membran (2) an sich für Luft und Wasserdampf durchlässig ist und dazu mit einer Vielzahl von über die Membranfläche vorzugsweise im Wesentlichen gleichmäßig verteilten Mikroporen (6) versehen ist,
**dadurch gekennzeichnet,**
**dass** ein Betriebsparameter der Membran (2) von einem Benutzer gezielt so veränderbar ist, dass die Membran (2) zwei unterschiedliche Betriebszustände einnimmt, wobei im ersten Betriebszustand die Mikroporen (6) der Membran (2) offen und im zweiten Betriebszustand die Mikroporen (6) der Membran (2) zumindest überwiegend, vorzugsweise komplett verschlossen sind und dass der Betriebsparameter die Betriebstemperatur der Membran (2) ist und der erste Betriebszustand durch Erwärmen der Membran (2) von einer niedrigen Betriebstemperatur auf eine hohe Betriebstemperatur und der zweite Betriebszustand durch Abkühlen der Membran (2) von einer hohen Betriebstemperatur auf eine niedrige Betriebstemperatur erreichbar ist.

2. Schutzmaterial nach Anspruch 1, **dadurch gekennzeichnet,**
**dass** die hohe Betriebstemperatur der Membran (2) bei 25 °C bis 40 °C und die niedrige Betriebstemperatur der Membran (2) um etwa 5 °C bis 25 °C, vorzugsweise etwa 6 °C bis 15 °C, unter der hohen Betriebstemperatur der Membran (2) liegt; und/oder
**dass** die Mikroporen (6) im zweiten Betriebszustand der Membran (2) durch in den Mikroporen (6) befindliches, insbesondere durch Adhäsion darin gehaltenes Wasser verschlossen sind; und/oder
**dass** die Mikroporen (6) der Membran (2) eine im Wesentlichen einheitliche Form und Größe, insbesondere Kreisform, haben; und/oder dass die Mikroporen (6) der Membran (2) einen mittleren Durchmesser aufweisen, der klein genug ist, um in den Mikroporen (6) Wasser durch Kapillarkraft zu halten, insbesondere einen mittleren Durchmesser zwischen 1 µm und 15 µm, vorzugsweise zwischen 4 µm und 12 µm und/oder dass die Membran (2) eine Dicke zwischen 1 µm und 500 µm, insbesondere zwischen 10 µm und 100 µm, vorzugsweise zwischen 20 µm und 70 µm, aufweist; und/oder
**dass** der Flächenanteil der Mikroporen (6) auf der Membran (2) zwischen 1 % und 50 %, insbesondere zwischen 2 % und 30 %, vorzugsweise zwischen 5 % und 25 %, beträgt.

3. Schutzmaterial nach einem der vorangehenden Ansprüche, **dadurch gekennzeichnet,**
**dass** die Membran (2) als Folie aus Kunststoff, Keramik oder Metall oder als mehrlagige Folie mit Lagen aus Kunststoff und/oder Keramik und/oder Metall ausgeführt ist; und/oder
**dass** die Membran (2) einen Kunststoff und/oder ein Polymer umfasst oder hieraus besteht, insbesondere wobei der Kunststoff und/oder das Polymer ausgewählt ist aus der Gruppe von Polyurethanen, Polyetheramiden, Polyesteramiden, Polyetherestern, Polytetrafluorethylenen und/oder Polymeren auf Cellulosebasis und/oder Derivaten der vorgenannten Verbindungen, vorzugsweise Polyetherestern und Polytetrafluorethylenen, wobei, besonders bevorzugt, die Membran (2) aus Polyethylen (PE) besteht.

4. Schutzmaterial nach Anspruch 3, **dadurch gekennzeichnet,**
**dass** die Membran (2) eine Ausrüstung, Lage oder, vorzugsweise, Beschichtung (7) aufweist, die zu einer erhöhten lateralen Wärmeleitfähigkeit der Membran (2) führt;
insbesondere wobei die Ausrüstung, Lage oder, vorzugsweise, Beschichtung (7) aus einem gut wärmeleitenden, vorzugsweise chemisch inerten Material, insbesondere einem Metall oder einer Metalllegierung, ganz insbesondere aus Gold, besteht.

5. Schutzmaterial nach Anspruch 4, **dadurch gekennzeichnet,**
**dass** die Beschichtung aus Gold eine Dicke zwischen 5 nm und 1.000 nm, vorzugsweise zwischen 10 nm und 800 nm, aufweist; und/oder dass die Beschichtung (7) beidseits oder, vorzugsweise, nur einseitig auf die die Membran (2) im Übrigen bildende Folie aufgebracht ist.

6. Schutzmaterial nach einem der vorangehenden Ansprüche, **dadurch gekennzeichnet,**
**dass** die Membran (2) mit einer Einrichtung (9) zur Abkühlung, und vorzugsweise auch zur Erwärmung, der Membran (2) bzw. einer Lage oder Beschichtung (7) der Membran (2) thermisch gekoppelt ist; und/oder dass die Einrichtung (9) eine elektrothermisch arbeitende Einrichtung ist, vorzugsweise ausgeführt als Peltiereinrichtung, insbesondere ausgeführt als eine Mehrzahl von über die Membran (2) verteilt angeordneten Peltierelementen; und/oder
**dass** die nicht mit der Membran (2) verbundene Seite der Peltiereinrichtung (9) bzw. der Peltierelemente direkt oder unter Zwischenschaltung einer wärmeleitenden Verbindung (11) auf die im Anwendungsfall der Umgebung zugewandte Seite des Schutzmaterials geführt ist.

7. Schutzmaterial nach einem der vorangehenden Ansprüche, **dadurch gekennzeichnet,**
**dass** die Membran (2) zumindest im Wesentlichen vollflächig mit dem Trägermaterial (3) verbunden ist oder
**dass** die Membran (2) abschnittsweise, insbesondere punktförmig, mit dem Trägermaterial (3) verbunden ist; und/oder
**dass** das Trägermaterial (3) ein Gewebe, Gewirke, Gestricke, Gelege, Vlies oder Textilverbundstoff ist und/oder
**dass** das Trägermaterial (3) ein Flächengewicht von 20 bis 250 g/m², insbesondere 30 bis 150 g / m², vorzugsweise 40 bis 120 g / m², aufweist und/oder
**dass** das Trägermaterial (3) abriebfest ausgebildet ist und insbesondere aus einem abriebfesten Textilmaterial besteht und/oder
**dass** das Trägermaterial (3) hydrophobiert und/oder oleophobiert und/oder plasmabehandelt ist.

8. Schutzmaterial nach einem der vorangehenden Ansprüche, **dadurch gekennzeichnet,**
**dass** das Schutzmaterial (1) eine Adsorptionsschicht (4) auf Basis eines insbesondere chemische und/oder biologische Gifte und/oder Schadstoffe adsorbierenden Adsorptionsmaterials aufweist, wobei, vorzugsweise, die Adsorptionsschicht (4) auf der dem Trägermaterial (3) abgewandten Seite der Membran (2) angeordnet ist; und/oder
**dass** die Adsorptionsschicht (4) diskontinuierlich ausgebildet ist und/oder dass die Adsorptionsschicht (4) als ein Adsorptionsflächenfilter ausgebildet ist; und/oder
**dass** das Adsorptionsmaterial der Adsorptionsschicht (4) ein Material auf Basis von Aktivkohle, insbesondere in Form von Aktivkohleteilchen und/oder Aktivkohlefasern, ist; und/oder
**dass** die Adsorptionsschicht (4) als Adsorptionsmaterial diskrete Aktivkohleteilchen, vorzugsweise in Kornform ("Kornkohle") oder Kugelform ("Kugelkohle"), umfasst, wobei der mittlere Durchmesser der Aktivkohleteilchen weniger als 1,0 mm, vorzugsweise weniger als 0,8 mm, bevorzugt weniger als 0,6 mm, beträgt.

9. Schutzmaterial nach Anspruch 8, **dadurch gekennzeichnet,**
**dass** die Adsorptionsschicht (4) als Adsorptionsmaterial Aktivkohlefasern, insbesondere in Form eines Aktivkohleflächengebildes, umfasst, insbesondere wobei das Aktivkohleflächengebilde ein Flächengewicht von 20 bis 200 g/m², insbesondere 50 bis 150 g/m², aufweist und/oder insbesondere wobei das Aktivkohleflächengebilde ein Aktivkohlegewebe, -gewirke, -gelege oder -verbundstoff, insbesondere auf Basis von karbonisierter und aktivierter Cellulose und/oder eines karbonisierten und aktivierten Acrylnitrils, ist; und/oder
**dass** die Aktivkohle eine innere Oberfläche (BET) von mindestens 800 m²/g, insbesondere von mindestens 900 m²/g, vorzugsweise von mindestens 1.000 m²/g, bevorzugt im Bereich von 800 bis 2.000 m²/g, aufweist.

10. Schutzmaterial nach einem der vorangehenden Ansprüche, **dadurch gekennzeichnet,**
**dass** das Schutzmaterial (1) eine Innenschicht (5), insbesondere ein Innenfutter, aufweist, wobei, vorzugsweise, die Innenschicht (5) auf der dem Trägermaterial (3) abgewandten Seite der Membran (2) und vorzugsweise, so vorhanden, auch der Adsorptionsschicht (4) angeordnet ist; und/oder insbesondere wobei die Innenschicht (5) in Form eines textilen Fläehengebildes ausgebildet ist, wobei, vorzugsweise, die Innenschicht (5) ein Gewebe, Gewirke, Gestricke, Gelege, Textilverbundstoff oder Vlies ist.

11. Schutzmaterial nach einem der vorangehenden Ansprüche, **dadurch gekennzeichnet,**
**dass** das Schutzmaterial (1) ein Gesamtflächengewicht von 150 bis 1.000 g/m², insbesondere 200 bis 800. g/m², vorzugsweise 250 bis 600 g/m², besonders bevorzugt 300 bis 500 g/m², aufweist und/oder dass das Schutzmaterial (1) eine Gesamtquerschnittsdicke von 0,1 mm bis 20 mm, insbesondere 0,5 mm bis 15 mm, vorzugsweise 1 mm bis 10 mm, bevorzugt 2 mm bis 5 mm, aufweist; und/oder
**dass** das Schutzmaterial (1) bei 25 °C und bei einer Dicke der Membran (2) von 50 µm bei geöffneter Membran (2) eine Wasserdampfdurchlässigkeit von mindestens 10 l/m² pro 24 h, insbesondere mindestens 15 l / m² pro 24 h, vorzugsweise mindestens 20 l/m² pro 24 h, aufweist und/oder dass das Schutzmaterial (1), bei einer Dicke der Membran (2) von 50 µm, bei geöffneter Membran (2) einen Wasserdampfdurchgangswiderstand Rₑₜ unter stationären Bedingungen, gemessen nach DIN EN 31 092:1993 (Februar 1994) und internationaler Norm ISO 11 092, bei 35 °C, von höchstens 30 (m²·Pascal)/Watt, insbesondere höchstens 25 (m².Pascal)/Watt, vorzugsweise höchstens 15 (m² ·-Pasca)/Watt, aufweist und/oder dass das Schutzmaterial (1), bei einer Dicke der Membran (2) von 50 µm, eine Barrierewirkung gegenüber chemischen Kampfstoffen, insbesondere Bis[2-chlorethyl]sulfid (Senfgas, Lost, Gelbkreuz), gemessen im Diffusionsströmungstest, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, aufweist.

12. Membran zur Verwendung in einem funktionellen Schutzmaterial (1), insbesondere mit Schutzfunktion gegenüber chemischen und/oder biologischen Giften und/oder Schadstoffen, wie Kampfstoffen,
wobei die Membran an sich für Luft und Wasserdampf durchlässig ist und dazu mit einer Vielzahl von über die Membranfläche vorzugsweise im Wesentlichen gleichmäßig verteilten Mikroporen (6) versehen ist,
**dadurch gekennzeichnet,**
**dass** ein Betriebsparameter der Membran (2) von einem Benutzer gezielt so veränderbar ist, dass die Membran (2) zwei unterschiedliche Betriebszustände einnimmt, wobei im ersten Betriebszustand die Mikroporen (6) der Membran (2) offen und im zweiten Betriebszustand die Mikroporen (6) der Membran (2) zumindest überwiegend, vorzugsweise komplett, verschlossen sind und dass der Betriebsparameter die Betriebstemperatur der Membran (2) ist und der erste Betriebszustand durch Erwärmen der Membran (2) von einer niedrigen Betriebstemperatur auf eine hohe Betriebstemperatur und der zweite Betriebszustand durch Abkühlen der Membran (2) von einer hohen Betriebstemperatur auf eine niedrige Betriebstemperatur erreichbar ist.

13. Membran nach Anspruch 12, **gekennzeichnet durch** die Merkmale des kennzeichnenden Teils eines oder mehrerer der Ansprüche 2 bis 11.

14. Verwendung eines Schutzmaterials nach einem der Ansprüche 1 bis 11 und/oder einer Membran nach Anspruch 12 oder 13 zur Herstellung von Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz.

15. Schutzgegenstände, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, wie Zelte, Schlafsäcke, vorzugsweise alle vorgenannten Schutzmaterialien für den ABC-Einsatz, hergestellt unter Verwendung eines Schutzmaterials nach einem der Ansprüche 1 bis 11 und/oder aufweisend ein Schutzmaterial nach einem der Ansprüche 1 bis 11 und/oder hergestellt. unter Verwendung einer Membran nach Anspruch 12 oder 13 und/oder aufweisend eine Membran nach Anspruch 12 oder 13.

## Claims

1. A functional protective material (1), in particular having a protective function against chemical and/or biological toxins and/or harmful substances, such as warfare agents, wherein the functional protective material (1) comprises a multilayer structure, wherein the multilayer structure has
- a plane, in particular textile carrier material (3), and
- a membrane (2) being attributed to the carrier material (3), in particular connected to the same,
wherein the membrane (2) is permeable to air and water vapor, and is equipped with a plurality of micropores (6) for this purpose, which are distributed across the membrane surface, preferably in an essentially even manner,
**characterized in that**
an operating parameter of the membrane (2) may be modified by the user in a targeted manner such that the membrane (2) assumes two different operating states, wherein in the first operating state the micropores (6) of the membrane (2) are open, and in the second operating state the micropores (6) of the membrane (2) are at least predominantly, preferably completely closed, and that the operating parameter is the operating temperature of the membrane (2), and the first operating state may be achieved by means of heating the membrane (2) from a low operating temperature to a high operating temperature, and the second operating state is achieved by means of cooling the membrane (2) from a high operating temperature to a low operating temperature.

2. The protective material according to claim 1, **characterized in that**
the high operating temperature of the membrane (2) is 25°C to 40°C, and the low operating temperature of the membrane (2) is about 5°C to 25°C, preferably about 6°C to 15°C, below the high operating temperature of the membrane (2); and/or
that the micropores (6) are closed in the second operating state of the membrane (2) by means of the water in the micropores (6), which is retained therein, in particular, by means of adhesion; and/or
that the micropores (6) of the membrane (2) have an essentially uniform shape and size, in particular circular shape; and/or
that the micropores (6) of the membrane (2) have an average diameter that is small enough in order to retain water in the micropores (6) by means of capillary force, in particular an average diameter of between 1 µm and 15 µm, preferably between 4 µm and 12 µm, and/or
that the membrane (2) has a thickness of between 1 µm and 500 µm, in particular between 10 µm and 100 µm, preferably between 20 µm and 70 µm; and/or
that the proportional surface of the micropores (6) on the membrane (2) is between 1% and 50%, in particular between 2% and 30%, preferably between 5% and 25%.

3. The protective material according to one of the preceding claims, **characterized in that**
the membrane (2) is embodied as a film made from plastic, ceramic, or metal, or as a multilayer film with layers made from plastic, and/or ceramic, and/or metal; and/or
the membrane (2) comprises a plastic and/or a polymer, or consists of the same, in particular, wherein the plastic and/or the polymer is selected from the group of polyurethanes, polyether amides, polyester amides, polyether esters, polytetrafluoroethylenes, and/or polymers based on cellulose, and/or the derivatives of the compounds mentioned above, preferably polyether esters and polytetrafluoroethylene, wherein, in a particularly preferred manner, the membrane (2) consists of polyethylene (PE).

4. The protective material according to claim 3, **characterized in that**
the membrane (2) has equipment, a layer, or preferably a coating (7) leading to an increased lateral thermal conductivity of the membrane (2);
in particular, wherein the equipment, layer, or preferably coating (7) consists of a well thermally conductive, preferably chemically inert material, in particular a metal or a metal alloy, most particularly of gold.

5. The protective material according to claim 4, **characterized in that**
the coating made from gold has a thickness of between 5 nm and 1,000 nm, preferably between 10 nm and 800 nm; and/or
the coating (7) is applied on both sides, or preferably, only on one side of the membrane (2) forming the film.

6. The protective material according to one of the preceding claims, **characterized in that**
the membrane (2) is thermally coupled to a unit (9) for cooling, preferably also for heating, the membrane (2), or a layer or coating (7) of the membrane (2); and/or
the unit (9) is an electrothermally operating unit, preferably constructed as a Peltier unit, in particular constructed as a plurality of Peltier elements distributed across the membrane (2); and/or
the side of the Peltier unit (9), or of the Peltier elements not connected to the membrane (2) is guided directly, or below an intermediate connection of a thermally conducting connector (11) on the side of the protective material facing the environment, in case of application.

7. The protective material according to one of the preceding claims, **characterized in that**
the membrane (2) is connected to the carrier material (3) at least essentially across the entire surface, or
the membrane (2) is connected to the carrier material (3) in sections, in particular in punctiform; and/or
the carrier material (3) is a fabric, knotted fabric, knit fabric, roving, fleece, or nonwoven fabric, and/or
the carrier material (3) has a surface weight of 20 to 250 g/m², in particular 30 to 150 g/m², preferably 40 to 120 g/m², and/or
the carrier material (3) is embodied in an abrasion-resistant manner, and in particular consists of an abrasion-resistant textile material, and/or
the carrier material (3) is made water-repellent, and/or oil-repellent, and/or is plasma-treated.

8. The protective material according to one of the preceding claims, **characterized in that**
the protective material (1) has an adsorption layer (4) based on an adsorption material adsorbing, in particular, chemical and/or biological toxins and/or contaminants, wherein preferably the adsorption layer (4) is disposed on the side of the membrane (2) facing away from the carrier material (3); and/or
the adsorption layer (4) is embodied in a discontinuous manner, and/or the adsorption layer (4) is embodied as an adsorption surface filter; and/or
the adsorption material of the adsorption layer (4) is a material based on activated carbon, in particular in the form of activated carbon particles, and/or activated carbon fibers; and/or
the adsorption layer (4) comprises discrete activated carbon particles, in particular in grain shape ("grain carbon") or spherical shape ("spherical carbon") as the adsorption material, wherein the average diameter of the activated carbon particles is less than 1.0 mm, preferably less than 0.8 mm, more preferred less than 0.6 mm.

9. The protective material according to claim 8, **characterized in that**
the adsorption layer (4) comprises activated carbon fibers, in particular in the shape of an activated carbon surface structure, as the adsorption material,
in particular, wherein the activated surface structure has a surface weight of 20 to 200 g/m², in particular 50 to 150 g/m², and/or in particular, wherein the activated surface structure is an activated carbon fabric, knotted fabric, roving, or composite, in particular based on carbonized and activated cellulose, and/or a carbonized and activated acrylonitrile; and/or
the activated carbon has an interior surface (BET) of at least 800 m²/g, in particular at least 900 m²/g, preferably at least 1,000 m²/g, preferably in the range of 800 to 2,000 m²/g.

10. The protective material according to one of the preceding claims, **characterized in that**
the protective material (1) has an interior layer (5), in particular an interior lining, wherein preferably the interior layer (5) is disposed on the side of the membrane (2) facing away from the carrier material (3), and, if present, also from the adsorption layer (4); and/or
in particular, wherein the interior layer (5) is embodied in the shape of a textile surface structure, wherein preferably the interior layer (5) is a fabric, knotted fabric, knit fabric, roving, textile composite, or nonwoven fabric.

11. The protective material according to one of the preceding claims, **characterized in that**
the protective material (1) has a total surface weight of 150 to 1,000 g/m², in particular 200 to 800 g/m², preferably 250 to 600 g/m², particularly preferred 300 to 500 g/m², and/or
the protective material (1) has a total cross-sectional thickness of 0.1 mm to 20 mm, in particular 0.5 mm to 15 mm, preferably 1 mm to 10 mm, more preferred 2 mm to 5 mm; and/or
the protective material (1) has a water vapor permeability of at least 10 l/m² per 24 h, in particular at least 15 10 l/m² per 24 h, preferably at least 20 10 l/m² per 24 h, at 25°C, and at a thickness of the membrane (2) of 50 µm at an opened membrane (2), and/or the protective material (1) has a water vapor contact resistance Rₑₜ under stationary conditions, as measured according to DIN EN 31 092:1993 (February 1994), and the international standard ISO 11 092, at a thickness of the membrane (2) of 50 µm and at 35°C, of not more than 30 (m²·Pascal)/Watt, in particular not more than 25 (m²·Pascal)/Watt, preferably not more than 15 (m²·Pascal)/Watt, and/or
the protective material (1) has a barrier effect against chemical warfare agents, in particular bis[2-chloroethyl]sulfide (sulfur mustard, dichloride diethyl sulfide, mustard gas), as measured in the diffusion flow test, at a thickness of the membrane (2) of 50 µm, of not more than 4 µg/cm² per 24 h, in particular not more than 3.5 µg/cm² per 24 h, preferably not more than 3.0 µg/cm² per 24 h, particularly preferred not more than 2.5 µg/cm² per 24 h.

12. A membrane for use in a functional protective material (1), in particular having a protective function against chemical and/or biological toxins and/or contaminants, such as warfare agents,
wherein the membrane is basically permeable to air and water vapor, and additionally having a plurality of micropores (6), which are distributed across the membrane surface, preferably in an essentially even manner,
**characterized in that**
an operating parameter of the membrane (2) may be modified by the user in a targeted manner such that the membrane (2) assumes two different operating states, wherein in the first operating state the micropores (6) of the membrane (2) are open, and in the second operating state the micropores (6) of the membrane (2) are at least predominantly, preferably completely closed, and that the operating parameter is the operating temperature of the membrane (2), and the first operating state may be achieved by means of heating the membrane (2) from a low operating temperature to a high operating temperature, and the second operating state is achieved by means of cooling the membrane (2) from a high operating temperature to a low operating temperature.

13. The membrane according to claim 12, **characterized by** the properties of the characteristic part of one or more of the claims 2 to 11.

14. A use of a protective material according to one of the claims 1 to 11, and/or of a membrane according to claims 12 or 13, for the production of protective articles of all types, in particular of protective clothing, in particular for the civilian or military fields, such as protective suits, protective gloves, protective shoes, protective socks, protective head gear, and the like, and of protective coverings of all types, preferably all protective materials mentioned above for ABC use.

15. Protective articles, in particular for the civilian or military fields, in particular of protective clothing, such as protective suits, protective gloves, protective shoes, protective socks, protective head gear, and the like, as well as protective coverings of all types, preferably all protective materials mentioned above for ABC use, which are produced using a protective material according to one of the claims 1 to 11, and/or having a protective material according to one of the claims 1 to 11, and/or are produced using a membrane according to claims 12 or 13, and/or having a membrane according to claims 12 or 13.

## Revendications

1. Matériau de protection fonctionnel (1), ayant en particulier une fonction de protection vis-à-vis des poisons et/ou polluants chimiques et/ou biologiques, tels que les agents de guerre chimique,
le matériau de protection fonctionnel (1) comprenant une structure multicouche, la structure multicouche comprenant
- un matériau support (3) bidimensionnel, en particulier textile, et
- une membrane (2), affectée au matériau support (3), en particulier assemblée au matériau support (3),
la membrane (2) étant en soi perméable à l'air et à la vapeur d'eau, et étant à cette fin pourvue d'un grand nombre de micropores (6) répartis sur la surface de la membrane, de préférence d'une manière essentiellement uniforme,
**caractérisé**
**en ce qu'**un paramètre d'utilisation de la membrane (2) peut être d'une manière ciblée modifié par un utilisateur de telle sorte que la membrane (2) prenne deux états d'utilisation différents, les micropores (6) de la membrane (2) étant ouverts dans un premier état d'utilisation et les micropores (6) de la membrane (2) étant au moins principalement, de préférence complètement obturés dans le deuxième état d'utilisation, et
**en ce que** le paramètre d'utilisation est la température d'utilisation de la membrane (2), et le premier état d'utilisation peut être atteint par chauffage de la membrane (2) d'une basse température d'utilisation à une température d'utilisation élevée, et le deuxième état d'utilisation peut être atteint par refroidissement de la membrane (2) d'une température élevée d'utilisation à une basse température d'utilisation.

2. Matériau de protection selon la revendication 1, **caractérisé**
**en ce que** la température élevée d'utilisation de la membrane (2) est de 25 à 40°C, et la basse température d'utilisation de la membrane (2) est d'environ 5 à 25°C, de préférence d'environ 6 à 15°C, inférieure à la température élevée d'utilisation de la membrane (2), et/ou
**en ce que** les micropores (6) sont, dans le deuxième état d'utilisation de la membrane (2), obturés par de l'eau se trouvant dans les micropores (6), maintenue en particulier dans ces derniers par adhérence ; et/ou
**en ce que** les micropores (6) de la membrane (2) ont une forme et une taille pour l'essentiel uniformes, en particulier une forme circulaire ; et/ou
**en ce que** les micropores (6) de la membrane (2) ont un diamètre moyen qui est suffisamment petit pour maintenir dans les micropores (6) l'eau sous l'effet d'une force capillaire, en particulier un diamètre moyen compris entre 1 µm et 15 µm, de préférence entre 4 µm et 12 µm, et/ou
**en ce que** la membrane (2) a une épaisseur comprise entre 1 µm et 500 µm, en particulier entre 10 µm et 100 µm, d'une manière particulièrement préférée entre 20 µm et 70 µm, et/ou
**en ce que** le rapport entre l'aire des micropores (6) et celle de la membrane (2) est compris entre 1 % et 50 %, en particulier entre 2 % et 30 %, de préférence entre 5 % et 25 %.

3. Matériau de protection selon l'une des revendications précédentes, **caractérisé**
**en ce que** la membrane (2) est configurée sous forme d'une feuille en un matériau plastique, en une céramique ou en un métal, ou sous forme d'une feuille multicouche ayant des couches en une matière plastique et/ou en une céramique et/ou en un métal ; et/ou
**en ce que** la membrane (2) comprend une matière plastique ou un polymère ou en est constituée, la matière plastique et/ou le polymère étant en particulier choisis dans le groupe des polyuréthannes, des polyétheramides, des polyesteramides, des polyétheresters, des polytétrafluoréthylènes et/ou des polymères à base de cellulose et/ou de dérivés des composés mentionnés ci-dessus, en particulier des polyétheresters et des polytétrafluoréthylènes, auquel cas on préfère en particulier que la membrane (2) soit constituée de polyéthylène (PE).

4. Matériau de protection selon la revendication 3, **caractérisé**
**en ce que** la membrane (2) comprend un apprêt, une couche ou de préférence un revêtement (7), qui conduit à une conductivité thermique latérale accrue de la membrane (2) ;
en particulier dans lequel l'apprêt, la couche ou de préférence le revêtement (7) est constitué d'un matériau bien conducteur de l'électricité, de préférence chimiquement inerte, en particulier un métal ou un alliage métallique, tout particulièrement l'or.

5. Matériau de protection selon la revendication 4, **caractérisé**
**en ce que** le revêtement d'or présente une épaisseur comprise entre 5 nm et 1000 nm, de préférence entre 10 nm et 800 nm, et/ou
**en ce que** le revêtement (7) est appliqué sur les deux faces, ou de préférence seulement sur une face sur la feuille formant pour le reste la membrane (2).

6. Matériau de protection selon l'une des revendications précédentes, **caractérisé**
**en ce que** la membrane (2) est thermiquement couplée à un dispositif (9) pour le refroidissement et de préférence aussi pour l'échauffement de la membrane (2) ou d'une couche ou d'un revêtement (7) de la membrane (2) ; et/ou
**en ce que** le dispositif (9) est un dispositif travaillant par voie électrothermique, de préférence constitué comme un dispositif à effet Peltier, de préférence configuré sous la forme d'un grand nombre d'éléments à effet Peltier disposés d'une manière répartie sur la membrane (2) ; et/ou
**en ce que** le côté du dispositif à effet Peltier (9) ou des éléments à effet Peltier, qui n'est pas assemblé à la membrane (2), est, directement, ou grâce au montage intermédiaire d'un composé (11) conducteur de la chaleur, guidé sur la face du matériau de protection qui dans le cas d'une utilisation est dirigé vers l'environnement.

7. Matériau de protection selon l'une des revendications précédentes, **caractérisé**
**en ce que** la membrane (2) est au moins pour l'essentiel en pleine surface assemblé au matériau support (3) ou
**en ce que** la membrane (2) est par segments, en particulier d'une manière ponctuelle, assemblée au matériau support (3), et/ou
**en ce que** le matériau support (3) est un tissu, un tricot, un article de bonneterie, une grille, un non-tissé ou un matériau composite textile, et/ou
**en ce que** le matériau support (3) présente une masse surfacique de 20 à 250 g/m², en particulier de 30 à 150 g/m², de préférence de 40 à 120 g/m²,
**en ce que** le matériau support (3) a une configuration résistante à l'abrasion et en particulier est constitué d'un matériau textile résistant à l'abrasion, et/ou
**en ce que** le matériau support (3) a subi un traitement d'hydrophobisation et/ou d'oléophobisation et/ou par plasma.

8. Matériau de protection selon l'une des revendications précédentes, **caractérisé**
**en ce que** le matériau de protection (1) comprend une couche adsorbante (4) à base d'un matériau adsorbant, qui adsorbe en particulier les poisons et/ou polluants chimiques et/ou biologiques, la couche adsorbante (4) étant de préférence disposée sur la face de la membrane (2) opposée au matériau support (3), et/ou
**en ce que** la couche adsorbante (4) a une configuration discontinue, et/ou
**en ce que** la couche adsorbante (4) est configurée comme un filtre plat adsorbant, et/ou
**en ce que** le matériau adsorbant de la couche adsorbante (4) est un matériau à base de charbon actif, en particulier sous forme de particules de charbon actif et/ou de fibres de charbon actif, et/ou
**en ce que** la couche adsorbante (4) comprend en tant que matériau adsorbant des particules discrètes de charbon actif, de préférence sous forme granulaire ("charbon granulaire") ou sous forme sphérique ("charbon sphérique"), le diamètre moyen des particules de charbon actif étant inférieur à 1,0 mm, de préférence inférieur à 0,8 mm, de préférence inférieur à 0,6 mm.

9. Matériau de protection selon la revendication 8, **caractérisé**
**en ce que** la couche adsorbante (4) comprend en tant que matériau adsorbant des fibres de charbon actif, en particulier sous forme d'une structure bidimensionnelle de charbon actif,
en particulier dans lequel la structure bidimensionnelle de charbon actif présente une masse surfacique de 20 à 200 g/m², en particulier de 50 à 150 g/m², et/ou en particulier dans lequel la structure bidimensionnelle en charbon actif est un tissu, un tricot, une grille ou un matériau composite en charbon actif, en particulier à base de cellulose carbonisée et activée et/ou d'un acrylonitrile carbonisé et activé, et/ou
**en ce que** le charbon actif a une aire interne (BET) d'au moins 800 m²/g, en particulier d'au moins 900 m²/g, de préférence d'au moins 1000 m²/g, de préférence comprise dans la plage de 800 à 2000 m²/g.

10. Matériau de protection selon l'une des revendications précédentes, **caractérisé**
**en ce que** le matériau de protection (1) comprend une couche intérieure (5), en particulier une garniture intérieure, la couche intérieure (5) étant disposée sur la face de la membrane (2) opposée au matériau support (3) et de préférence, si elle est présente, aussi bien sur la couche adsorbante (4), et/ou
en particulier la couche intérieure (5) étant configurée sous forme d'une structure textile bidimensionnelle, la couche intérieure (5) étant alors de préférence un tissu, un tricot, un article de bonneterie, une grille, un matériau composite textile ou un non-tissé.

11. Matériau de protection selon l'une des revendications précédentes, **caractérisé**
**en ce que** le matériau de protection (1) a une masse surfacique totale de 150 à 1000 g/m² , en particulier de 200 à 800 g/m², de préférence de 250 à 600 g/m², d'une manière particulièrement préférée de 300 à 500 g/m², et/ou
**en ce que** le matériau de protection (1) présente une épaisseur totale en coupe transversale de 0,1 mm à 20 mm, en particulier de 0,5 mm à 15 mm, de préférence de 1 mm à 10 mm, d'une manière préférée de 2 mm à 5 mm, et/ou
**en ce que** le matériau de protection (1) présente à 25°C et pour une épaisseur de la membrane (2) de 50 µm, quand la membrane (2) est ouverte, une perméabilité à la vapeur d'eau d'au moins 10 l/m² par 24 h, en particulier d'au moins 15 l/m² par 24 h, de préférence d'au moins 20 l/m² par 24 h, et/ou
**en ce que** le matériau de protection (1) présente, pour une épaisseur de la membrane (2) de 50 µm, quand la membrane (2) est ouverte, une résistance à la pénétration de la vapeur d'eau Rₑₜ dans des conditions stationnaires, mesurée selon DIN EN 31 092:1993 (février 1994) et selon la norme internationale ISO 11 092 à 35°C, d'au plus 30 (m²·Pascal)/Watt, en particulier d'au plus 25 (m²·Pascal)/Watt, de préférence d'au plus 15 (m²·Pascal)/Watt, et/ou
**en ce que** le matériau de protection (1) présente, pour une épaisseur de la membrane (2) de 50 µm, un effet barrière vis-à-vis des agents de guerre chimique, en particulier le sulfure de bis[2-chloroéthyle] (gaz moutarde, gaz LOST, ypérite), mesuré par l'essai d'écoulement par diffusion, d'au plus 4 µg/cm² par 24 h, en particulier d'au plus 3,5 µg/cm² par 24 h, de préférence d'au plus 3,0 µg/cm² par 24 h, d'une manière particulièrement préférée d'au plus 2,5 µg/cm² par 24 h.

12. Membrane pour utilisation dans un matériau de protection fonctionnel (1), ayant en particulier une fonction de protection vis-à-vis de poisons et/ou de polluants chimiques et/ou biologiques, tels que les agents de guerre chimique,
la membrane étant en soi perméable à l'air et à la vapeur d'eau, et à cette fin étant pourvue d'un grand nombre de micropores (6) répartis sur la surface de la membrane, de préférence d'une manière essentiellement uniforme,
**caractérisée**
**en ce qu'**un paramètre d'utilisation de la membrane (2) peut être d'une manière ciblée modifié par un utilisateur de telle sorte que la membrane (2) prenne deux états d'utilisation différents, les micropores (6) de la membrane (2) étant ouverts dans un premier état d'utilisation et les micropores (6) de la membrane (2) étant au moins principalement, de préférence complètement obturés dans le deuxième état d'utilisation, et en ce que le paramètre d'utilisation est la température d'utilisation de la membrane (2), et le premier état d'utilisation peut être atteint par chauffage de la membrane (2) d'une basse température d'utilisation à une température d'utilisation élevée, et le deuxième état d'utilisation peut être atteint par refroidissement de la membrane (2) d'une température élevée d'utilisation à une basse température d'utilisation.

13. Membrane selon la revendication 12, **caractérisée par** les éléments caractéristiques de la partie caractéristique d'une ou plusieurs des revendications 2 à 11.

14. Utilisation d'un matériau de protection selon l'une des revendications 1 à 11 et/ou d'une membrane selon la revendication 12 ou 13 pour fabriquer des objets de protection de tout type, en particulier pour des vêtements de protection, en particulier pour le domaine civil ou militaire, notamment les combinaisons de protection, les chaussures de protection, les gants de protection, les chaussettes de protection, les vêtements de protection de la tête et analogues, et les recouvrements de protection de tout type, de préférence tous les matériaux de protection mentionnés ci-dessus, pour une utilisation ABC.

15. Objets de protection, en particulier pour le domaine civil ou militaire, notamment les combinaisons de protection, les chaussures de protection, les gants de protection, les chaussettes de protection, les vêtements de protection de la tête et analogues, et les recouvrements de protection de tout type, de préférence tous les matériaux de protection mentionnés ci-dessus, pour une utilisation ABC, fabriqué par utilisation d'un matériau de protection selon l'une des revendications 1 à 11 et/ou comportant un matériau de protection selon l'une des revendications 1 à 11 et/ou fabriqué par utilisation d'une membrane selon la revendication 12 ou 13 et/ou comportant une membrane selon la revendication 12 ou 13.
